# EUROPEAN PATENT SPECIFICATION

(11) **EP 4 254 148 B1**
(45) Date of publication and mention of the grant of the patent: **10.09.2025**
(21) Application number: 22164928.8
(22) Date of filing: 29.03.2022
(51) Int. Cl.: G06F 3/02, G06F 3/01, G06F 1/3215, G06F 1/3231, G06F 1/3296, G06F 1/3287, G06F 1/3234

(54) **ALTERING A STATE OF A LIGHT ON A PERIPHERAL DEVICE**
ÄNDERUNG DES ZUSTANDES EINES LICHTS AUF EINEM PERIPHERIEGERÄT EINES COMPUTERS
MODIFICATION D'UN ÉTAT D'UNE LUMIÈRE SUR UN DISPOSITIF PÉRIPHÉRIQUE D'UN ORDINATEUR

(43) Date of publication of application: 04.10.2023
(73) Proprietor: Société Civile "GALILEO 2011", 98000 Monaco (MC)
(72) Inventor: PASCUCCI, Antonio, 82229 Seefeld (DE); DE DONNO, Antonio, 06300 Nice (FR)
(74) Representative: Schmidt, Steffen J.

(56) References cited:
- CN-A- 108 377 596
- US-A1- 2018 068 636
- US-A1- 2021 200 327

## Description

### TECHNICAL FIELD

The present solution relates to a method for altering a state of a light on a first peripheral device of a computer.

The present invention is defined in the claims. Relevant details are also to be found in the description and drawings.

### TECHNICAL BACKGROUND

Keyboards are known where an altering of a state of a light on the keyboard is dependent on factors such as ambient light detectors and distance detectors, which detect a distance between a user and the keyboard. However, these known solutions require the detectors to be always on or for the detectors to only be dependent on user inputs.

There is therefore a need for a method of altering a state of a light on a keyboard automatically without user input.

Prior art is found in CN 108 377 596 A which generally relates to a keyboard lamp control device, method thereof and computer with keyboard lamp control device, in US 2021/200327 A1 which generally relates to a display apparatus and in US 2018/068636 A1 which generally relates to an electronic device having ancillary display with color control.

### SUMMARY

The present solution is set out in the independent claims. Preferred embodiments are outlined in the dependent claims.

According to a first aspect, a method for altering a state of a light on a first peripheral device of a computer is defined in claim 1.

A "state" of a light as used and understood herein stands for an "on" state of the light where the light is functioning, or an "off" state of the light where it is not functioning or an "intensity" of the light i.e. how bright the light is to the human eye.

In the above, and throughout the present disclosure, each method step may be undertaken by the computer driver, by the processor, by the memory, by computer driver-processor interactions, by memory-processor interactions, by computer driver-memory interactions, by transmitter-receiver interactions, by any other known method for undertaking the described method or by a plurality of the aforementioned possibilities. For example, the above receiving steps and comparing step may be undertaken by the computer driver and/or the processor and/or via computer driver-processor interactions and the executing step may be undertaken by the processor and/or by memory-processor interactions. A computer driver-processor interaction may be defined as an input, from the first peripheral device or another source, being fed to the processor via the computer driver, or vice versa. Additionally, any functionalities of the computer described herein may be undertaken by at least one of the aforementioned possibilities.

A computer driver as used and understood herein is software that allows a computer to communicate with an internal or external computer hardware device, e.g. a peripheral device. Without drivers, the devices connected to the computer - for example, a mouse or external keyboard - will not work properly.

The present proposal allows for altering a state of the light on the first peripheral device based on receiving an output from the first and/or second sensor, comparing this output/ these outputs against a threshold value and altering the state of the light based on if the threshold value has been exceeded. This may allow for a fully automatic altering of the state of the light, thereby allowing the user to focus on other tasks. This may also allow for the intensity difference between the ambient light levels and the peripheral device light levels to be minimized, therefore reducing eye strain for the user of the peripheral device. This may also allow for the power usage of the peripheral device to be controlled in a more efficient manner, thereby extending the time needed between charges of the peripheral device.

Throughout the present disclosure, when "a/the threshold value" is used, it may also be understood to also mean "(the) at least one threshold value". Furthermore, any references to a singular threshold value may also apply to a plurality of threshold values and vice versa. The same may also apply to any feature described in the present disclosure.

The computer may be a laptop, a tablet computer, a desktop computer, a mobile phone or any other type of computer. The computer is Windows-based and/or Apple-based and/or Linux-based and/or based on any other suitable type of operating system. The processor may be configured to execute instructions stored in the memory. The display screen may be a commercially available display screen or a bespoke display screen. The peripheral device may be a commercially available peripheral device. Preferably, it is a bespoke peripheral device having dedicated macro keys as described herein.

A peripheral device as used and understood herein may refer to an auxiliary device coupled to a computer, such as a keyboard, a numeric keypad, a mouse, a bespoke peripheral device, a controller, a touchpad, a trackball, a joystick or any other suitable peripheral device. Throughout the present disclosure, any references made to a first, second or third peripheral device may be understood as referring to any suitable peripheral device.

Throughout this present disclosure, a reference to an "actuator" may refer to a key on a peripheral device and/or a button on a peripheral device and/or any other suitable actuatable component which is a peripheral device and/or on a computer. Furthermore, any reference to a "key" or a "button" may be understood to refer to the term "actuator", as described above. In some examples, that actuator is an illuminable actuator. That is to say, the light may at least be partially contained within the actuator itself.

In some examples, the computer driver is stored by the memory. The computer driver may be preinstalled on the memory or may be downloadable, and then storable by the memory, from the internet and/or from a USB stick and/or from a compact disk.

The first sensor may be any suitable type of sensor such as, for example, a capacitive, optical, or an infrared sensor, and/or wherein the first sensor located on a keyboard, a numerical keypad or a 2D or 3D input device. The use of a capacitive, optical or infrared sensor to measure a proximity of a user to the first peripheral device may allow for the proximity of the user to be measured in an accurate manner. This may also mean that the light of the first peripheral device is not accidentally activated if the user is not near the first peripheral device, leading to an increased battery lifespan of the first peripheral device. In some examples, the first sensor is located on the first peripheral device but alternatively, the first sensor may be located on a surface proximate to the first peripheral device, such as, for example, a table, or may be located on a display screen coupled to the computer. In some examples, there is a plurality of first sensors and the computer may receive outputs from each of these sensors, thereby decreasing the likelihood that the light is accidentally activated and increasing the accuracy of the inputs to the computer.

The second sensor may be any suitable sensor configured to determine an ambient light level in the area surrounding the first peripheral device. This may be an ambient light sensor that is commercially available, an ambient light sensor that is bespoke, or any other suitable method for detecting an ambient light level. In some examples, the second sensor is located on the first peripheral device but alternatively, the second sensor may be located on a surface proximate to the first peripheral device, such as, for example, a table, or may be located on a display screen coupled to the computer. In some examples, there is a plurality of second sensors and the computer may receive outputs from each of these sensors, increasing the accuracy of the inputs to the computer.

Any other type of suitable sensor may replace the above-described first and/or second sensors, or may be used in addition to the above-described first and/or second sensors such as, for example, an eye tracking module or a sensor the user wears which monitors their health. Furthermore, the computer driver and/or the processor may receive the outputs from the first and/or second sensor.

The threshold value is a value which takes into account at least one predetermined value relating to the output of the first sensor and at least one predetermined value relating to the output of the second sensor. In some examples, the threshold value may be stored in at least one of a lookup table, a hash table, a branch table and a matrix. These may allow for the threshold value to take into account the predetermined values of the first and second sensor and thereby alter the state of the light dependent on the threshold value. In a non-limiting example, if the predetermined value for the first sensor was constant, and there were multiple predetermined values relating to the output of the second sensor, the state of the light may therefore depend on the ambient light in the area surrounding the first peripheral device. The threshold value may therefore determine if the light is switched on, switched off, or if the intensity of the light is altered. Furthermore, the processor executes the command to alter the state of the light only if the at least one threshold value has been exceeded. The at least one threshold value may be stored in the memory of the computer and/or stored in a device coupleable to the computer, e.g. a USB drive, a CD-ROM or DVD, in cloud storage accessible by the memory and/or processor and/or via any other suitable storage medium.

Additionally or alternatively, the at least one threshold value may be stored in a component of the computer not mentioned herein but is known to the skilled person as being a component of a computer and/or in a memory and/or processor of the peripheral device, as will be described in more detail below and/or a component of the peripheral device not mentioned herein but is known to the skilled person as being a component of a peripheral device. In some examples, the at least one threshold value may be stored in the computer and/or the peripheral device in such a way in that when the computer and /or the peripheral device is powered on for a first time, and/or any other time, the at least one threshold value is already used as a default parameter. That is to say, the at least one threshold value may be pre-programmed into any suitable part of the computer and/or peripheral device.

Throughout the present disclosure, any suitable value, such as, for example, the first value of the at least one threshold value and/or the second value of the at least one threshold value and/or a sensitivity of the first and/or second sensor and/or a first and/or second and/or third light intensity value and/or a first and/or a second parameter value and/or a limiting parameter and/or any other suitable value and/or parameter may be stored in a similar way as described above.

The first and/or second sensor may be coupled to the computer via wired means, such as data and/or power cables or any other suitable wired communication protocol and/or via wireless means such as, for example, Wi-Fi, Bluetooth^{®} , BLE or any other suitable wireless communication protocol.

In some examples, the computer is configured to alter the at least one threshold value based on a computer program detected by the computer.

The computer program to be detected may be any program that is executable by the processor and/or a secondary processor of the computer. The computer program may be a file editor and/ or a computer-aided drawing, CAD, program and/or an internet browser and/or a video game and/or a computer repair tool and/or any program executable by a processor on a computer. The at least one threshold value may therefore be altered dependent on the computer program detected by the computer, and in particular, the computer driver. In a non-limiting example, the threshold value may be increased, resulting in, for example, a higher threshold needed to switch the light on if the detected program is a virtual reality, VR, computer program as the user will most likely have a headset on and not need to use the peripheral device.

The computer is configured to increase a sensitivity of the first sensor and/or the second sensor when a first computer program is detected and/or decrease the sensitivity of the first sensor and/or the second sensor when a second computer program is detected. This may not alter the at least one threshold value but instead make reaching the at least one threshold value easier if the computer detects the first computer program and harder if the computer detects the second computer program. This may be due to, for example, the outputs from the sensors being multiplied by a first predetermined factor if the first computer program is detected and multiplied by a second predetermined factor if the second computer program is detected, wherein the first predetermined factor is greater than one and the second predetermined factor is less than one. Additionally or alternatively, thresholds for the first and/or second sensor may be altered by the computer and/or the computer driver and/or the processor. In a non-limiting example, if the threshold for the first sensor detecting a user is 50 centimeters from the first sensor, this may be increased to 80 centimeters if the first computer program is detected and reduced to 20 centimeters if the second computer program is detected. The computer programs which lead to an increase or decrease in sensitivity of the sensors may be predetermined by the computer and/or the computer driver and/ or the processor and/or the memory and/or determined by a user of the first peripheral device. The predetermined factors may additionally or alternatively be predetermined by the computer and/or the computer driver and/or the processor and/or determined by a user of the first peripheral device. The above may allow for the battery lifetime of the first peripheral device to be increased as the state of the light can be altered. This may also lead to increased customization opportunities for the emission of the light.

The first program is a computer-aided design, CAD, program and the second computer program is a video game program and/or a virtual reality, VR, video game program. The first and second computer programs may include any further computer program detectable by a computer, as described above.

In some examples, the light on the first peripheral device comprises at least one of a light emitting diode, LED, an organic light emitting diode, OLED, and a quantum dot, QD, display. The light may be any suitable light emitting element which is able to be turned on and off and/or be able to have the intensity of said light be increased or decreased dependent on the command executed by the computer, and in particular, by the processor. In some examples, the light is a white light or an RGB light. The use of an RGB light may allow for the color of the light to be altered, automatically by the computer driver and/or via an input by the user, dependent on the program such as, for example, a predominantly yellow light being used during the use of a first computer program and a predominantly purple light being used during the use of a second computer program. This allows for the state of the light to be customizable dependent on the detected computer program.

In some examples, the command relating to the altering of the state of the light is a command relating to a turning off or a turning on of the light on the first peripheral device and/or a change in the intensity of the light on the first peripheral device from a first value to a second value, wherein the second value is based on the at least one threshold value. The command may therefore instruct the light on the first peripheral device to alter its state. If the user falls outside a predetermined value of the first sensor, the computer and/or the computer driver and/or the processor may instruct the light on the first peripheral device to be switched off. If the detected ambient light falls outside a predetermined value of the second sensor, the computer and/or the computer driver and/or the processor may instruct the light on the first peripheral device to increase or reduce its intensity. This may allow for the state of the light on the first peripheral device to be automated according to its environmental conditions, thereby improving the lifetime of the battery of the first peripheral device, reducing the need for user input and reducing the eye strain of the user of the first peripheral device.

In some examples, the method further comprises receiving, by the computer from a second peripheral device, a first input from a user, wherein the first input comprises at least one alteration to the at least one threshold value; changing, by the computer, the at least one threshold value from a first value to a second value, wherein the second value is the value of the at least one threshold value after the changing of the at least one threshold value; and storing the second value of the at least one threshold value. This may allow for the granularity of the output of the at least one threshold value to be increased. This may also allow for the at least one threshold value to be altered depending on a wish of the user should the at least one threshold value predetermined by the computer not be suitable for the user. This in turn may allow for the user to customize their experience with the first peripheral device. In some examples, the alteration applies to only the computer program being currently detected by the computer. In some examples, the user can alter the at least one threshold value for each computer program individually. In some examples, the alteration is a universal alteration applying to all computer programs detectable by the computer. The above steps may be, in some examples, undertaken by the computer driver and/or the processor and/or by computer driver-processor interactions and/or by memory-processor interactions. The second value of the at least one threshold value may be stored at least partially in the memory of the computer and/or in a memory external to the computer accessible by at least the processor and/or computer driver and/or in cloud-based accessible by at least the processor and/or computer driver.

In some examples, the first input comprises the addition of at least one further threshold value. This may allow for the user to set multiple threshold values for the detected computer program. In this example, and in any other examples described in this specification where multiple threshold values are suitable, the computer driver and/or the processor and/or the memory may create ranges between threshold values in order to determine the command to be sent to the light on the first peripheral device. In a non-limiting example, if there were two threshold values, if the comparison determines that the outputs of the first and/or second sensor are below the first threshold value, a first command may be executed. If the comparison determines that the outputs of the first and/or second sensor are between the two threshold values, a second command may be executed. If the comparison determines that the outputs of the first and/or second sensor are above the second threshold value, a third command may be executed. This may allow for the state of the light to be altered dependent on the environment of the area surrounding the first peripheral device without input from the user of the first peripheral device.

In some examples the method further comprises receiving, by the computer, a second input from the user, wherein the second input comprises at least one alteration to a parameter relating to the first sensor and/or the second sensor; changing, by the computer, the parameter from a first value to a second value, wherein the second value is the value of the parameter after the changing of the parameter; and storing the second value of the parameter, wherein the limiting parameter relates to a change in a sensing parameter of the first sensor and/or the second sensor. This may allow for the granularity of the inputs to the computer to be increased. The parameter may be, for example, a detection threshold of the sensors, a time in which the sensors are active, or any other suitable parameter. In some examples, the second input comprises the increase or decrease of the sensitivity the first sensor and/or the second sensor. This may allow for the user to alter the sensitivity of the first and/or second sensor should the sensitivities predetermined by the computer not be suitable for the user. For example, if the user finds that the light of the first peripheral device is being accidentally turned on too often, the user may reduce the sensitivity of the first sensor and a predetermined factor may be applied, as described above. Additionally or alternatively, the user may alter a detection threshold of the first sensor from, for example, 50 centimeters to 30 centimeters. The above steps may be, in some examples, undertaken by the computer driver and/or the processor and/or by computer driver-processor interactions and/or by memory-processor interactions. The second value of the parameter may be stored in the memory of the computer and/or in a memory external to the computer accessible by at least the processor and/or computer driver and/or in cloud-based accessible by at least the processor and/or computer driver.

In the above alterations by the user, the user may alter the at least one threshold value and/or the parameter via a configuration tool displayed on a display screen coupled to the computer. The configuration tool may allow a user to alter the at least one threshold value and/or the parameter to their needs and wishes, as described above, thereby leading to a more customizable light in the first peripheral device. The display screen may be a computer monitor, a tablet computer coupled to the computer via wired and/or wireless means, a mobile phone coupled to the computer via wired and/or wireless means, or any other suitable method of display. The user may use the configuration tool via use of the first peripheral device and/or any other suitable peripheral device.

In some examples, the method further comprises receiving, by the computer, a third input from a user, wherein the third input comprises at least one limiting parameter relating to the first sensor and/or the second sensor; storing the at least one limiting parameter; and limiting the at least one threshold value so the said at least one threshold value cannot be compared by the computer, wherein the limiting parameter relates to a change in a sensing parameter of the first sensor and/or the second sensor. This may allow for the user to alter the limits of the state of the light. For example, a user may find that if the light on the first peripheral device is too bright at 100% intensity, the user may reduce the upper limit of the intensity to 80%. Resultantly, the computer and/or the computer driver and/or the processor and/or the memory may then disregard any comparisons to threshold values that would result in a command being executed exceeding this 80% intensity threshold. Additionally or alternatively, the user may set a universal minimum for the detection threshold of the first sensor to be, for example, 50 centimeters. Resultantly, the at least one threshold value and/or the computer and/or the computer driver and/or the processor and/or the memory may determine all outputs from the first sensor that relate to distances below 50 centimeters to be equivalent to an input of the first sensor being 50 centimeters. This may allow for the user to customize the state of the light according to their own needs. The above steps may be, in some examples, undertaken by the computer driver and/or the processor and/or by computer driver-processor interactions and/or by memory-processor interactions. The at least one limiting parameter may be stored at least partially in the memory of the computer and/or in a memory external to the computer accessible by at least the processor and/or computer driver and/or in cloud-based accessible by at least the processor and/or computer driver.

In some examples, the at least one limiting parameter relates to a duration of the light on the first peripheral device being on and/or the intensity of the light on the first peripheral device. As described above, a user may find that if the light on the first peripheral device is too bright at 100% intensity, the user may reduce the upper limit of the intensity to 80%. Resultantly, the computer and/or the computer driver and/or the processor and/or the memory may then disregard any comparisons to threshold values that would result in a command being executed exceeding this 80% intensity threshold.

Additionally, the user may alter the parameter so that if the comparison leads to the at least one threshold value not being exceeded, the command may instruct the light to stay on for an additional 10 seconds before turning off and/or returning to its previous state. This may allow for the light to maintain its current state should the user briefly move away from the first peripheral device and/or should the lights in the room which the first peripheral device is located be briefly switched off. This may allow for the user of the first peripheral device to maintain working even though the environmental conditions have changed. In some examples, the user may alter the parameter so that the light maintains its current state for 3 seconds before being altered to the next state due to the at least one threshold value being exceeded. This also may allow for temporary alterations in the environmental conditions in the area surrounding the first peripheral device to be discarded. These may allow for a more customizable light state.

In some examples, the at least one limiting parameter relates to a sensitivity of the first sensor and/or second sensor. As described above, the outputs from the first and/or second sensor may be multiplied by a first predetermined factor if a first computer program is detected and multiplied by a second predetermined factor if a second computer program is detected, wherein the first predetermined factor is greater than one and the second predetermined factor is less than one. In some examples, the predetermined factor is not dependent on the computer program, but may be a universal predetermined factor applied to all computer programs.

In some examples, the computer is further configured to receive a local time of the computer from the processor, and wherein the at least one threshold value further comprises at least one value relating to the local time, and/or the computer is further configured to retrieve a sunrise and/or a sunset time from an external website, and wherein the at least one threshold value further comprises at least one value relating to the sunrise and/or sunset time. In some particular examples, the at least one limiting parameter relates to the local time of the computer and/or the sunrise and/or sunset time, and wherein the at least one limiting parameter relates to an altering of the intensity of the light. The computer may be configured to receive a local time from the processor and resultantly, limit the at least one threshold value. The computer may be configured to receive a sunrise and/or a sunset time from the external website via the processor and resultantly, limit the at least one threshold value. For example, if the user of the first peripheral device works between 0900 and 1700, the detection threshold of the first sensor may be set to be 50 centimeters and outside of these hours, the detection threshold may be set to 30 centimeters. If the computer retrieves sunrise and/or sunset times, the universal intensity limit of the light may be reduced during the night. For example, the universal intensity limit may gradually reduce from 100% to 50% during a transition between day and night and gradually increase from 50% to 100% during a transition from night to day. Additionally or alternatively, the computer may use a gradually changing predetermined multiplication factor on an output from the second sensor during these transitions to reduce or increase the effect that ambient light has on the at least one threshold value during the night. In some examples, the user may be able to customize these times and/or universal intensity limits and/or multiplication factors according to their needs, thereby increasing the customization of the state of the light. The above steps may be, in some examples, undertaken by the computer driver and/or the processor and/or by computer driver-processor interactions and/or by memory-processor interactions.

In some examples, the computer is further configured to receive a value relating to a battery charge status of the first peripheral device, and wherein the at least one threshold value further comprises at least one value relating to the battery charge status of the first peripheral device. In some particular examples, the at least one limiting parameter relates to the battery charge status of the first peripheral device. In some examples, upon the battery charge status falling below a certain threshold such as, for example, 25%, computer and/or the computer driver and/or the processor and/or the memory may start limiting the at least one threshold value. For example, the computer and/or the computer driver and/or the processor and/or the memory may discard any outputs from the first sensor that relate to readings over 30 centimeters and treat all readings over 30 centimeters as if they were 30 centimeters. This may reduce the number of times the light is switched on as said light is only switched on if the user is in close proximity to the first peripheral device. In some examples, the computer and/or the computer driver and/or the processor and/or the memory may reduce the intensity of the light by applying a predetermined multiplication factor to the command and/or by setting a universal maximum. The user may additionally or alternatively be able to set these limits manually. This may in turn extend the time needed between charges of the first peripheral device. The above steps may be, in some examples, undertaken by the computer driver and/or the processor and/or by computer driver-processor interactions and/or by memory-processor interactions.

In some examples, the at least one limiting parameter can override the command relating to the altering of the state of the light on the first peripheral device if the computer receives the indication that the at least one threshold value has been exceeded. That is to say, if the computer receives an indication that the at least one threshold value has been exceeded, the computer and/or the computer driver and/or the processor and/or the memory may discard this indication if it conflicts with the at least one limiting parameter currently in place. This may lead to the state of the light on the first peripheral device not exceeding any limits put in place by the computer and/or the user, thereby leading to improved user satisfaction. Instead of discarding the indication, the computer and/or the computer driver and/or the processor and/or the memory may use a multiplication factor on the command so that the command does not exceed the limits put in place by the computer and/or the user while still allowing the state of the light to be altered based on the surrounding environmental conditions. The above step may be, in some examples, undertaken by the computer driver and/or the processor and/or by computer driver-processor interactions and/or by memory-processor interactions.

In some examples, the output from the first sensor and/or the output from the second sensor are not compared with the at least one threshold value due to the at least one limiting parameter. In this example, if the computer and/or the user has instructed the second sensor to be turned off, or for outputs from the second sensor to be discarded, the computer may then discard all outputs from the second sensor and rely on only outputs from the first sensor for the comparison with the at least one threshold value. This may allow for the user to customize the state of the light and for the battery life of the first peripheral device to be extended as only one of the sensors is functioning. The above step may be, in some examples, undertaken by the computer driver and/or the processor and/or by computer driver-processor interactions and/or by memory-processor interactions.

In some examples, the computer further comprises a transmitter and the method further comprises transmitting to the first peripheral device, the command relating to the altering of the state of the light on the first peripheral device if the computer receives the indication that the at least one threshold value has been exceeded. In some examples, the transmitter performs this transmitting step. The first peripheral device may, in some examples, comprise a receiver configured to receive the transmitted signals. This may allow for the first peripheral device to be a wireless device, thereby improving the versatility of the first peripheral device is it can be placed anywhere in relation to the computer, as long as it is within the transmitting radius of the transmitter.

In some examples, the light is configured to backlight an actuator on the first peripheral device, and/or wherein the light is a white light or an RGB light, and/or wherein the computer removes or reduces the blue light of the RGB light during night time hours to reduce eye strain. The (back)light may allow for one or more actuators on the first peripheral device to be highlighted by said (back)light. This may result in the one or more actuatorsto be spotted by the user and/or indicated by the first peripheral device in an easier manner. The reduction of blue light in the RGB light may result in a reduction in eye strain during the night time hours, thereby improving the eye health of the user. The computer and/or the at least one threshold value may comprise an instruction relating to the RGB components of the RGB light and may reduce the blue component as a result of a user input and/or as a result of a predetermined threshold by the computer. The above steps may be, in some examples, undertaken by the computer driver and/or the processor and/or by computer driver-processor interactions and/or by memory-processor interactions.

In some examples, the intensity of the light is configured to change from the first value to a third value or the second value to the third value when the actuator is actuated, wherein the third value is determined by the computer or the user. This may allow for the user to more accurately see which actuator has been actuated during use of the first peripheral device, thereby improving the accuracy of the use of the first peripheral device. In some examples, the third value of the intensity may be higher than one of the first and second values, higher than both the first and second values or lower than both the first and second values.

In some examples, the second sensor is configured to remove at least one component relating to light output by a monitor coupled to the computer and determine the ambient light level of the area surrounding the first peripheral device without the at least one component relating to light output by the monitor. This may allow for a more accurate determination of the actual ambient light of the surrounding environment to be determined by the second sensor. This, in turn, may lead to a more accurate input regarding the ambient light into the computer, thereby allowing for a more accurate comparison to be made with the at least one threshold value and a command which may provide for a state of the light which is more suitable to the environmental conditions. This may result in reduced eye strain for the user of the first peripheral device.

In some examples, at least two of the first peripheral device, the second peripheral device and the third peripheral device are the same peripheral device. This may allow for multiple inputs to be input by the same peripheral device, thereby reducing the number of peripheral devices needed to execute the method described herein.

According to a second aspect, we describe a computer program as defined in claim 13.

The computer may be a laptop, a tablet computer, a desktop computer, a mobile phone or any other type of computer. The computer is Windows-based and/or Apple-based and/or Linux-based and/or based on any other suitable type of operating system. The processor may be configured to execute instructions stored in the memory. The display screen may be a commercially available display screen or a bespoke display screen. The peripheral device may be a commercially available peripheral device. Preferably, it is a bespoke peripheral device having dedicated macro keys as described herein.

A peripheral device as used and understood herein may refer to an auxiliary device coupled to a computer, such as a keyboard, a numeric keypad, a mouse, a bespoke peripheral device, a controller, a touchpad, a trackball, a joystick or any other suitable peripheral device. Throughout the present disclosure, any references made to a first, second or third peripheral device may be understood as referring to any suitable peripheral device.

Throughout this present disclosure, a reference to an "actuator" may refer to a key on a peripheral device and/or a button on a peripheral device and/or any other suitable actuatable component located on a peripheral device and/or on a computer. Furthermore any reference to a "key" or a "button" may be understood to refer to the term "actuator", as described above.

In some examples, the computer driver is stored by the memory. The computer driver may be preinstalled on the memory or may be downloadable, and then storable by the memory, from the internet and/or from a USB stick and/or from a compact disk.

The first sensor may be any suitable type of sensor such as, for example, a capacitive, optical, or an infrared sensor, and/or wherein the first sensor located on a keyboard, a numerical keypad or a 2D or 3D input device. The use of a capacitive, optical or infrared sensor to measure a proximity of a user to the first peripheral device may allow for the proximity of the user to be measured in an accurate manner. This may also mean that the light of the first peripheral device is not accidentally activated if the user is not near the first peripheral device, leading to an increased battery lifespan of the first peripheral device. In some examples, the first sensor is located on the first peripheral device but alternatively, the first sensor may be located on a surface proximate to the first peripheral device, such as, for example, a table, or may be located on a display screen coupled to the computer. In some examples, there is a plurality of first sensors and the computer may receive outputs from each of these sensors, thereby decreasing the likelihood that the light is accidentally activated and increasing the accuracy of the inputs to the computer.

The second sensor may be any suitable sensor configured to determine an ambient light level in the area surrounding the first peripheral device. This may be an ambient light sensor that is commercially available, an ambient light sensor that is bespoke, or any other suitable method for detecting an ambient light level. In some examples, the second sensor is located on the first peripheral device but alternatively, the second sensor may be located on a surface proximate to the first peripheral device, such as, for example, a table, or may be located on a display screen coupled to the computer. In some examples, there is a plurality of second sensors and the computer may receive outputs from each of these sensors, thereby increasing the accuracy of the inputs to the computer.

Any other type of suitable sensor may replace the above-described first and/or second sensors, or may be used in addition to the above-described first and/or second sensors.

The threshold value is a value which takes into account at least one predetermined value relating to the output of the first sensor and at least one predetermined value relating to the output of the second sensor. In some examples, the threshold value may be stored in at least one of a lookup table, a hash table, a branch table and a matrix. These may allow for the threshold value to take into account the predetermined values of the first and second sensor and thereby alter the state of the light dependent on the threshold value. In a non-limiting example, if the predetermined value for the first sensor was constant, and there were multiple predetermined values relating to the output of the second sensor, the state of the light may therefore depend on the ambient light in the area surrounding the first peripheral device. The threshold value may therefore determine if the light is switched on, switched off, or if the intensity of the light is altered. Furthermore, the computer, via preferably the processor, executes the command to alter the state of the light only if the at least one threshold value has been exceeded. The at least one threshold value may be stored in the memory of the computer and/or stored in a device coupleable to the computer, such as, for example, a USB drive, a CD-ROM or DVD, in cloud storage accessible by the memory and/or processor and/or via any other suitable storage medium.

The first and/or second sensor may be coupled to the computer via wired means, such as data and/or power cables or any other suitable wired communication protocol and/or via wireless means such as, for example, Wi-Fi, Bluetooth or any other suitable wireless communication protocol.

According to a third aspect, we describe a computer system as defined in claim 11.

The first peripheral device may be a commercially available peripheral device, may be a bespoke peripheral device or may be any type of peripheral device described above.

In some examples, the memory and processor are configured to periodically communicate with a cloud storage medium and store the limiting parameters and/or the limits put in place by the computer and/or the user and/or the at least one threshold value in the cloud storage medium. This may allow for the limiting parameters and/or the limits put in place by the computer and/or the user and/or the at least one threshold value to be stored in the cloud, thereby allowing for the parameters and/or at least one threshold value to be maintained if the peripheral device is transferred to a second computer. This may allow for a user to maintain their created and customized parameters and/or at least one threshold value across devices. The user may access the cloud stored parameters and/or at least one threshold value via a user account on a website. The computer and/or processor and/or memory may also be coupled to this same account for easy storage and/or retrieval of the parameters and/or at least one threshold value on a second computer.

According to a fourth aspect, we describe a computer-readable storage medium as defined in claim 14.

It is clear to a person skilled in the art that the statements set forth herein may be implemented under use of hardware circuits, software means, or a combination thereof. The software means can be related to programmed microprocessors or a general computer, an ASIC (Application Specific Integrated Circuit) and/or DSPs (Digital Signal Processors). For example, the processor may be implemented at least partially as a computer, a logical circuit, an FPGA (Field Programmable Gate Array), a processor (for example, a microprocessor, microcontroller (µC) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

### BRIEF DESCRIPTION OF THE DRAWINGS

These and other aspects of the solution will now be further described, by way of example only, with reference to the accompanying Figs, wherein like reference numerals refer to like parts, and in which:
Fig. 1 shows a flow diagram of a method of altering a state of a light on a peripheral device of a computer according to some examples as described herein;
Fig. 2 shows a flow diagram of a method of altering a state of a light on a peripheral device of a computer according to some examples as described herein;
Fig. 3 shows a flow diagram of a method of altering a state of a light on a peripheral device of a computer according to some examples as described herein;
Figs 4a, b show methods of comparing outputs from a first and/or second sensor with an at least one threshold value according to some examples as described herein;
Fig. 5 shows a schematic illustration of a computer system according to some examples as described herein; and
Figs 6a, b, c show schematic illustrations of a peripheral device according to some examples as described herein.

### DETAILED DESCRIPTION OF THE SOLUTION

Throughout the present disclosure, reference is made to a Windows operating system. The described solution may also be suitable for an Apple operating system and/or a Linux operating system and/or any other type of operating system. Features described in the present disclosure with relation to a Windows operating system can be realized with their equivalents in other operating systems.

Furthermore, throughout the following, each method step disclosed to be undertaken by the computer may be undertaken by the computer driver, by the processor, by the memory, by computer driver-processor interactions, by memory-processor interactions, by computer driver-memory interactions, by transmitter-receiver interactions, by any other known method for undertaking the described method or by a plurality of the aforementioned possibilities.

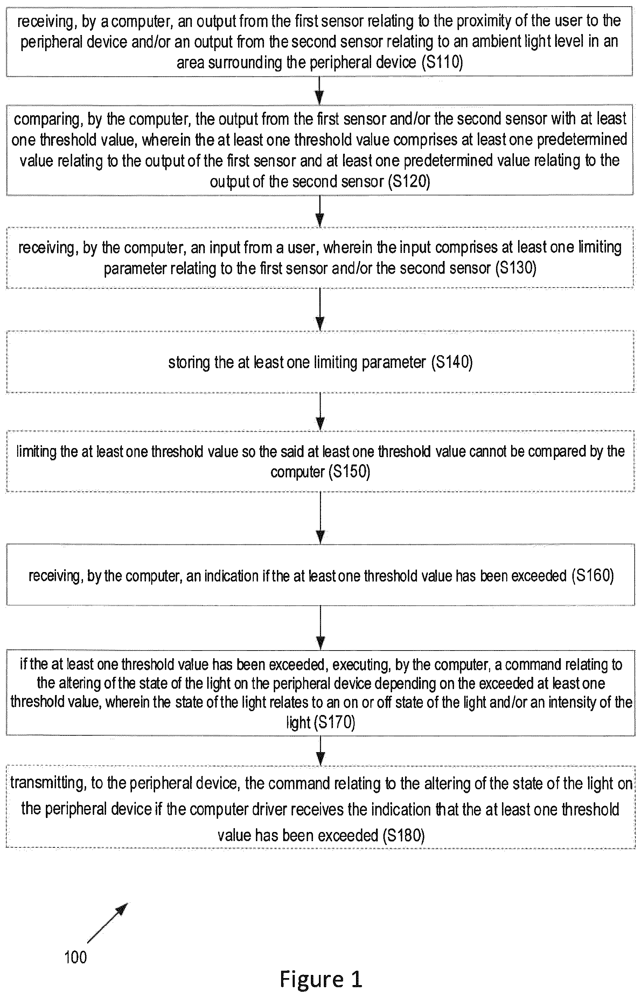

Fig. 1 shows a flow diagram of a method 100 of altering a state of a light on a peripheral device of a computer according to some examples as described herein.

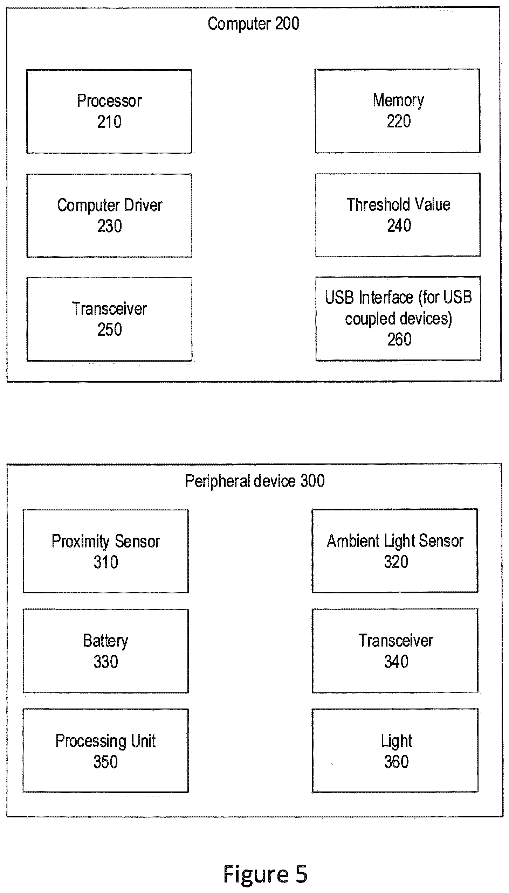

The method 100 begins by receiving S110, by the computer (see Fig. 5), an output from the first sensor (see Fig. 5) relating to the proximity of the user to the peripheral device (see Fig. 5) and/or an output from the second sensor (see Fig. 5) relating to an ambient light level in an area surrounding the peripheral device (see Fig. 5).

The first sensor may be any suitable type of sensor such as, for example, a capacitive, optical, or an infrared sensor, and/or wherein the first sensor located on a keyboard, a numerical keypad or a 2D or 3D input device. In some examples, the first sensor is located on the peripheral device but alternatively, the first sensor may be located on a surface proximate to the peripheral device, such as, for example, a table on which the peripheral device is located, or may be located on a display screen coupled to the computer. In some examples, there is a plurality of first sensors and the computer may receive outputs from each of these sensors, thereby decreasing the likelihood that the light is accidentally activated and increasing the accuracy of the inputs to the computer.

The second sensor may be any suitable sensor configured to determine an ambient light level in the area surrounding the peripheral device. This may be an ambient light sensor that is commercially available, an ambient light sensor that is bespoke, or any other suitable method for detecting an ambient light level. In some examples, the second sensor is located on the peripheral device but alternatively, the second sensor may be located on a surface proximate to the peripheral device, such as, for example, a table on which the peripheral device is located, or may be located on a display screen coupled to the computer. In some examples, there is a plurality of second sensors and the computer may receive outputs from each of these sensors, thereby increasing the accuracy of the inputs to the computer. The second sensor may also be configured to remove at least one component relating to light output by a monitor coupled to the computer and determine the ambient light level of the area surrounding the peripheral device without the at least one component relating to light output by the monitor. This may allow for a more accurate determination of the actual ambient light of the surrounding environment to be determined by the second sensor. This, in turn, may lead to a more accurate input regarding the ambient light into the computer, thereby allowing for a more accurate comparison to be made with the at least one threshold value and a command which may provide for a state of the light which is more suitable to the environmental conditions. This may result in reduced eye strain for the user of the peripheral device.

Any other type of suitable sensor may replace the above-described first and/or second sensors, or may be used in addition to the above-described first and/or second sensors. The first and/or second sensor may, in some examples, be coupled to the computer via wired means such as, for example, a power and/or data cable and/or wireless means such as, for example, Wi-Fi, Bluetooth, short range RF communication or any other suitable type of wired and/or wireless communication.

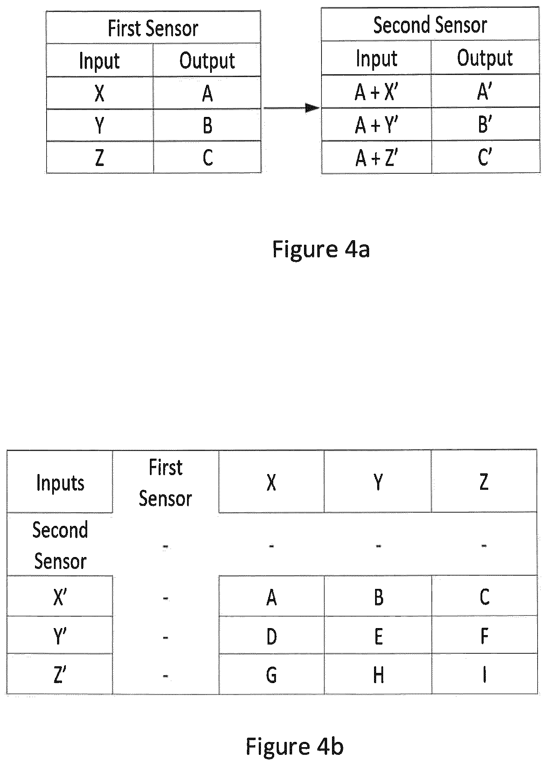

After receiving S110 the outputs, the computer then compares S120 the output from the first sensor and/or the second sensor with at least one threshold value, wherein the at least one threshold value comprises at least one predetermined value relating to the output of the first sensor and at least one predetermined value relating to the output of the second sensor. The at least one threshold value is a value which takes into account at least one predetermined value relating to the output of the first sensor and at least one predetermined value relating to the output of the second sensor. In some examples, the threshold value may be stored in at least one of a lookup table, a hash table, a branch table and a matrix (see Figs 4a and 4b). These may allow for the threshold value to take into account the predetermined values of the first and second sensor and thereby alter the state of the light dependent on the at least one threshold value. In a non-limiting example, if the predetermined value for the first sensor was constant, and there were multiple predetermined values relating to the output of the second sensor, the state of the light may therefore depend on the ambient light in the area surrounding the peripheral device. The threshold value may therefore determine if the light is switched on, switched off, or if the intensity of the light is altered. The at least one threshold value may be stored in the memory of the computer and/or stored in a device coupleable to the computer, such as, e.g. , a USB drive, a CD-ROM or DVD, in cloud storage accessible by the memory and/or processor and/or via any other suitable storage medium.

In the example of Fig. 1, after the computer has compared S120 the outputs with the at least one threshold value, the computer receives S130 an input from a user, wherein the third input comprises at least one limiting parameter relating to the first sensor and/or the second sensor. The limiting parameter may be a parameter which is detected by the computer but is not included in the parameters for comparison S120 until the parameter is activated by the user. In some examples, the limiting parameter is a custom parameter created by the user in order to customize their experience with the light on the peripheral device. In some examples, the user is able to download parameters from the Internet and use at least one of these downloaded parameters as limiting parameters.

A limiting parameter may be defined as, for example, a parameter which relates to a duration of the light on the peripheral device and/or the intensity of the light on the peripheral device, a sensitivity of the first and/or second sensor, a parameter where the output from the first and/or second sensor is not compared with the at least one threshold value, a parameter which relates to a battery charge status of the peripheral device, a parameter which relates to the local time of the computer, a parameter which relates to the sunrise and/or sunset time of the location the computer is in, or any other suitable parameter.

In the case of the duration of the light and/or the intensity of the light being the limiting parameter, a user may find that if the light on the peripheral device is too bright at 100% intensity, the user may reduce the upper limit of the intensity to 80%. Resultantly, the computer may then disregard any comparisons to threshold values that would result in a command being executed exceeding this 80% intensity threshold. Additionally or alternatively, the user may alter the parameter so that if the comparison leads to the at least one threshold value not being exceeded, the command may instruct the light to stay on for an additional 10 seconds before turning off or returning to its previous state. This may allow for the light to maintain its current state should the user briefly move away from the peripheral device and/or should the lights in the room which the peripheral device is located be briefly switched off. This may allow for the user of the peripheral device to maintain working even though the environmental conditions have changed. In some examples, the user may alter the parameter so that the light maintains its current state for 3 seconds before being altered to the next state due to the at least one threshold value being exceeded.

In the case of the sensitivity of the first and/or second sensor being the limiting parameter, the outputs from the first and/or second sensor may be multiplied by a first or second predetermined factor in order to alter the sensitivity of said sensors. In a non-limiting example, if a first computer program is detected, the outputs of the first and/or second sensor may be multiplied by a first multiplication factor and if a second computer program is detected, the output of the first and/or second sensor may be multiplied by a second predetermined factor, wherein the first predetermined factor is greater than one and the second predetermined factor is less than one. In some examples, the predetermined factor is not dependent on the computer program, but may be a universal predetermined factor applied to all computer programs. In an additional or alternative non-limiting example, the limiting factor relating to the sensitivity may be that the detection thresholds of the first and/or second sensor are altered. For example, the detection threshold of the first sensor may be altered from 50 centimeters to 25 centimeters by the computer and/or the user.

In the case of the parameter being an output from the first and/or second sensor being not compared with the at least one threshold value, in a non-limiting example, if the computer and/or the user has instructed the second sensor to be turned off, or for outputs from the second sensor to be discarded, the computer may then discard all outputs from the second sensor and rely on only outputs from the first sensor for the comparison S120 with the at least one threshold value.

In the case of the battery charge status being the limiting parameter, upon the battery charge status falling below a certain threshold such as, for example, 25%, the computer may start limiting the at least one threshold value so that certain threshold values cannot be compared S120. For example, the computer may discard any outputs from the first sensor that relate to readings over 30 centimeters and treat all readings over 30 centimeters as if they were 30 centimeters. In some examples, the computer may reduce the intensity of the light by applying a predetermined multiplication factor, similar or the same to the multiplication factor described above, to the command and/or set a universal maximum. The user may additionally or alternatively be able to set these limits manually. This may in turn extend the time needed between charges of the peripheral device.

In the case the local time of the computer is the limiting parameter, the computer may be able to limit the at least one threshold value. In a non-limiting example, the computer may be preprogrammed to determine that the working hours of a user is between 0900 and 1700. Resultantly, within these hours, the detection threshold of the first sensor may be set to be 50 centimeters and outside of these hours, the detection threshold may be set to 30 centimeters. In some examples, the user is able to manually alter these hours according to their working schedule and/or to their needs. In some examples, the user and/or the computer is able to assign as many periods as the user wishes to have different limiting parameters.

If the sunrise and/or sunset time is a limiting parameter, the universal intensity limit of the light may be reduced during the night. For example, the universal intensity limit may gradually reduce from 100% to 50% during a transition between day and night and gradually increase from 50% to 100% during a transition from night to day. Additionally or alternatively, the computer may use a gradually changing predetermined multiplication factor on an output from the second sensor during these transitions to reduce the effect that ambient light has on the at least one threshold value during the night. In some examples, the user may be able to customize these times and/or universal intensity limits and/or multiplication factors according to their needs, thereby increasing the customization of the state of the light. In some examples, the user is able to manually alter the "location" of the computer from, for example, Munich, Germany to New York City, USA should the user want to acclimatize to the time of New York City in order to reduce jetlag or if the user is working according to New York City's time zone while being situated in Munich. In some examples, the processor of the computer is configured to retrieve the sunrise and/or sunset time from a website.

In the above, should the user wish to manually alter the limiting parameters, in this examples or in any other examples described herein, the user may alter the at least one threshold value and/or the parameter via a configuration tool displayed on a display screen coupled to the computer. The configuration tool may allow a user to alter the at least one threshold value and/or the parameter to their needs and wishes, as described above, thereby leading to a more customizable light in the peripheral device. The display screen may be a computer monitor, a tablet computer coupled to the computer via wired and/or wireless means, a mobile phone coupled to the computer via wired and/or wireless means, or any other suitable method of display. The user may use the configuration tool via use of the peripheral device and/or any other suitable peripheral device.

After receiving S130 the input, the at least one limiting parameter may then be stored S140 at least partially in the memory. The at least one threshold value may be stored in the memory of the computer and/or stored in a device coupleable to the computer, such as, for example, a USB drive, a CD-ROM or DVD, in cloud storage accessible by the memory and/or processor and/or via any other suitable storage medium. In some examples, the at least one limiting parameter is not stored in the memory at all and is instead stored in at least one of the other above-mentioned methods of storage.

After storing S140 the at least one limiting parameter, the computer then limits S150 the at least one threshold value so the at least one threshold value cannot be compared by the computer. This is to say that the computer can override the command relating to the altering of the state of the light on the peripheral device via the at least one limiting parameter. For example, if the computer receives an indication that the at least one threshold value has been exceeded, the computer may discard this indication if it conflicts with the at least one limiting parameter currently in place. This may lead to the state of the light on the peripheral device not exceeding any limits put in place by the computer and/or the user, thereby leading to improved user satisfaction. In some examples, instead of discarding the indication, the computer may use a multiplication factor on the command so that the command does not exceed the limits put in place by the computer and/or the user while still allowing the state of the light to be altered based on the surrounding environmental conditions.

After limiting S150 the at least one threshold value, the computer then receives S160 an indication that the at least one threshold value has been exceeded. In some examples, the limiting S150 step and this receiving S160 step happen simultaneously. In some examples, this receiving S160 step happens before the limiting S150 step. The indication may be an indication merely stating that the at least one threshold value has been exceeded, or may be an indication also comprising information on which at least one threshold value has been exceeded and how this relates to the state of the light on the peripheral device.

After receiving S160 the indication then, if the at least one threshold value has been exceeded, a command relating to the altering of the state of the light on the peripheral device depending on the exceeded at least one threshold value is executed S170 by the processor, wherein the state of the light relates to an on or off state of the light and/or an intensity of the light. This execution may be undertaken via known memory-processor interactions. In some examples, the command comprises the state of the light which the light should be changed to i.e. a second state of the light from the present first state of the light. In some examples, the memory stores the first state of the light and the command comprises only the changes needed to alter the state of the light to the second state.

In some examples, after executing S170 the instruction, the command is transmitted S180 to the peripheral device. The peripheral device may, in some examples, comprise a receiver configured to receive the transmitted signals. This may allow for the peripheral device to be a wireless device, thereby improving the versatility of the peripheral device is it can be placed anywhere in relation to the computer, as long as it is within the transmitting radius of the transmitter.

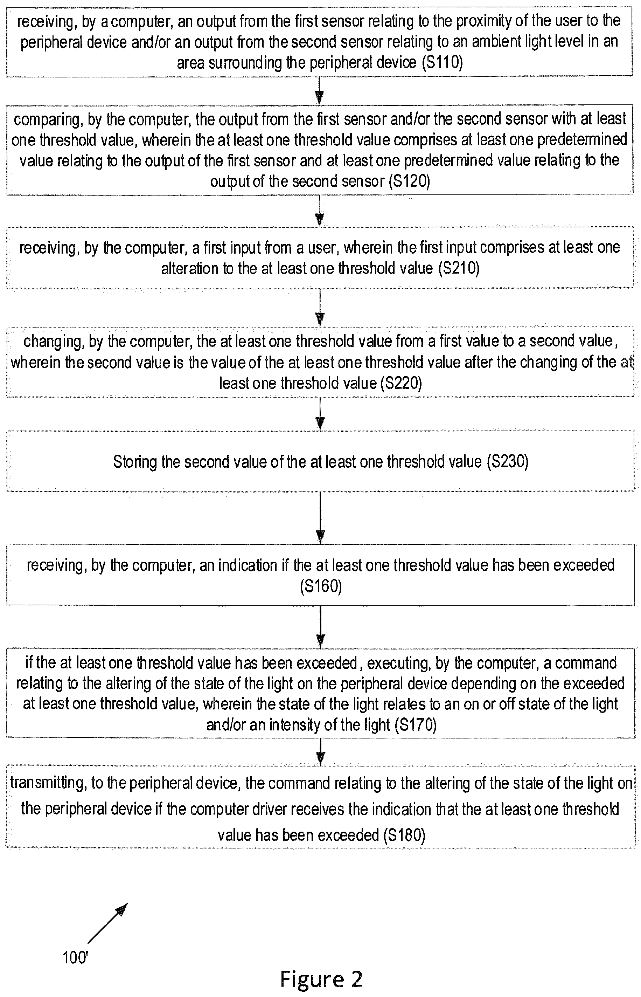

Fig. 2 shows a flow diagram of a method 100' of altering a state of a light on a peripheral device of a computer according to some examples as described herein.

In this example, the receiving S110 of the output of the first and/or second sensor, the comparing S120 of the output with the at least one threshold value, the receiving S160 of the indication that the at least one threshold value has been exceeded, the executing S170 of the command and, in some examples, the transmission S180 of the command are the same as those described above.

In this method 100', after the comparison S120 step, the computer receives S210 an input, wherein the input comprises at least one alteration to the at least one threshold value. This may allow for the granularity of the output of the at least one threshold value to be increased. This may also allow for the at least one threshold value to be altered depending on a wish of the user should the at least one threshold value predetermined by the computer not be suitable for the user. In a non-limiting example, if the user determines that the first sensor is too sensitive for their liking, the user may then raise the at least one threshold value so that the user must be closer to the first sensor before the at least one threshold value is exceeded. In some examples, the alteration applies to only the computer program being currently detected by the computer. In some examples, the user can alter the at least one threshold value for each computer program.

In some examples, receiving S210 the above-described input comprises the addition of at least one further threshold value. This may allow for the user to set multiple threshold values for the detected computer program. In this example, and in any other examples described in this specification where multiple threshold values are suitable, the computer driver and/or the processor and/or the memory may create ranges between threshold values in order to determine the command to be sent to the light on the peripheral device. In a non-limiting example, if there were two threshold values, if the comparison determines that the outputs of the first and second sensor are below the first threshold value, a first command may be executed. If the comparison determines that the outputs of the first and second sensor are between the two threshold values, a second command may be executed. If the comparison determines that the outputs of the first and second sensor are above the second threshold value, a third command may be executed. This may allow for the state of the light to be altered dependent on the environment of the area surrounding the peripheral device without input from the user of the peripheral device. The addition of at least one further threshold value to the at least one threshold value may allow for the user to more accurately curate their experience with the light on the peripheral device according to their own needs and wishes. In some examples, the computer is preprogrammed with a plurality of threshold values. In some examples, the user can manually alter at least one of the plurality of threshold values via the configuration tool described above. In some examples, the memory is configured to store behaviors of the user of the peripheral device and suggest new threshold values to the user that may better suit their needs and/or automatically add a new threshold value to the existing at least one threshold value.

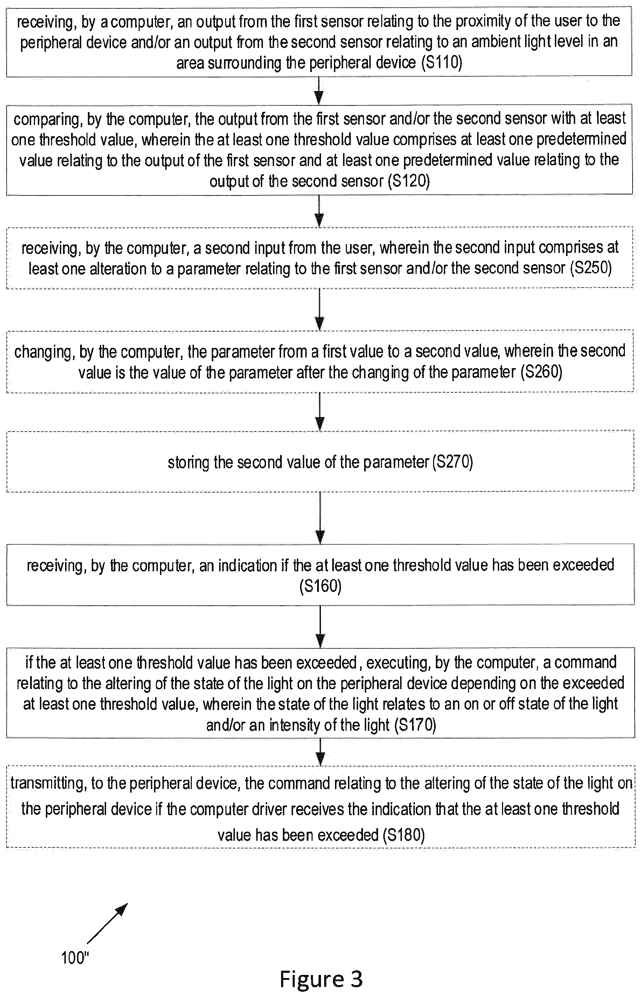

After receiving S210 the input, the computer then changes S220 the at least one threshold value from a first value to a second value, wherein the second value is the value of the at least one threshold value after changing the at least one threshold value and the second value of the at least one threshold value is stored S230. This changing S220 and storage S230 may be facilitated by the memory of the computer and/or via any of the other possible storage methods described herein. In some examples, the memory overwrites the first value with the second value in the memory. In some examples, the memory may temporarily store S230 the first value after the changing S220 and after a predetermined period of time, ask the user if they want to maintain the second value or revert back to the first value of the at least one threshold value. Fig. 3 shows a flow diagram of a method 100' of altering a state of a light on a peripheral device of a computer according to some examples as described herein.

In this example, the receiving S110 of the output of the first and/or second sensor, the comparing S120 of the output with the at least one threshold value, the receiving S160 of the indication that the at least one threshold value has been exceeded, the executing S170 of the command and, in some examples, the transmission S180 of the command are the same as those described above.

In this method 100", after the comparison S120 step, the computer receives S250 an input from a user comprising at least one alteration to a parameter relating to the first sensor and/or second sensor.

This may allow for the granularity of the inputs to the computer to be increased. The parameter may be, for example, a detection threshold of the sensors, a time in which the sensors are active i.e. between 0700 and 2000, or any other suitable parameter. In some examples, the input comprises an increase or decrease of the sensitivity the first sensor and/or the second sensor in a similar method as described above. For example, if the user finds that the light of the peripheral device is being accidentally turned on too often, the user may reduce the sensitivity of the first sensor. Additionally or alternatively, the user may alter a detection threshold of the first sensor from, for example, 50 centimeters to 30 centimeters.

After receiving S250 the input, the computer may then change S260 the at least one parameter from a first value to a second value and store S270 said second value in a manner similar to that described in relation to Fig. 2. That is, the changing S260 and storing S270 may be facilitated by the memory of the computer and/or via any of the other possible storage methods described herein. In some examples, the memory overwrites the first value with the second value in the memory. In some examples, the memory may temporarily store S270 the first value after the changing S260 and after a predetermined period of time, ask the user if they want to maintain the second value or revert back to the first value of the at least one threshold value.

The methods 100, 100', 100" described above in relation to Figs 1 to 3 may take place separately, may be undertaken simultaneously or may be undertaken in series.

In some examples of the above-described methods 100, 100', 100", not all of the described steps of the described methods 100, 100', 100" are required. In some examples, the steps may be in a different order. In some examples, some of the steps may happen simultaneously.

Figs 4a and b show methods of comparing outputs from a first and/or second sensor with an at least one threshold value according to some examples as described herein.

Fig. 4a shows a first method of comparing outputs with an at least one threshold value. In this example, a reading from the first sensor is taken which relates to an input of the first sensor. This input could be a distance of the user from the first sensor and/or an electrical reading should the first sensor be a capacitive sensor and/or any other suitable method of determine a distance of the user from the first sensor. The computer may make this comparison and determine the input is equivalent to "X" and therefore, the output of the table regarding the first sensor should be "A". This output may then be used as an input for a second table which relates to an input of the second sensor. The input of the second sensor may relate to an ambient light intensity of the area surrounding the peripheral device and/or an intensity of a component of RBG light and/or any other suitable parameter relating to ambient light. The second table may then use this input in order to generate an output. For example, should the input of the second sensor be "Y'", the output of the second table would be "B'". This output is then used as the basis of the command to be executed S170 by the processor. In particular, the output may relate to the second state of the light, as described above. It should be realized that of the input of the first sensor was "Y", the output would be "B" and the second table regarding the input of the second sensor would be different. That is to say, in this example, for each output of the first table, there is a corresponding second table which may, in some examples, have different outputs from one or more of the other second tables.

Fig. 4b shows an alternate method of comparison. In this example, there is only a single table in the form of a matrix. The input sensing thresholds of the first sensor are located on the top row and the input sensing thresholds of the second sensor are located in the left column. Resultantly, an output is determined from these two inputs. For example, should the input of the first sensor be "Y" and the input of the second sensor be "Z'", the output of the table would be "H". Similar to above, this output is then used as the basis of the command to be executed S170 by the processor and in particular, the output may relate to the second state of the light, as described above.

The above are just examples of how to create an output from the inputs of the first and second sensor however, many other methods of comparison are possible, as will be evident to the skilled person. In the above, although only three inputs for each sensor are shown, any number of input thresholds could be used in the respective methods.

Furthermore, the computer and/or the computer driver and/or the processor and/or the memory may decide to default an input to a threshold should the input not be at that threshold. In a non-limiting example, if the thresholds for the first sensor were 20 centimeters, i.e. "X", and 40 centimeters, i.e. "Y", and the actual measurement by the first sensor was 35 centimeters, the computer could determine the input to be equivalent to "Y" as it is the closest threshold available in the table to the current measurement. In some alternate examples, the computer could decide to round down i.e. if the measurement by the first sensor was 35 centimeters, the computer would determine the input to be "X" as the "Y" threshold has not been exceeded. In some alternate examples, the computer could decide to round up i.e. if the measurement by the first sensor was 25 centimeters, the computer would determine the input to be "Y".

Fig. 5 shows a schematic illustration of a computer system according to some examples as described herein.

The computer system comprises a computer 200 and a peripheral device 300.

The computer 200 may be a desktop computer, a tablet computer, electronic components within a mobile phone or any other suitable device which is suitable for carrying out the methods described in the present disclosure.

The computer comprises a processor 210, a memory 220 and a computer driver 230.

In this example, the memory 220 is configured to be accessible by the processor 210. In some examples, the computer driver 230 is at least partially resident in the memory 220. In some examples, the computer program used by the user is at least partially resident in the memory 220. In some examples, the memory 220 is configured to store the limiting parameters and/or the limits put in place by the computer 200 and/or the computer driver and/or the user and/or the at least one threshold value, as described above. In some examples, the computer driver 230 is stored by the memory 220. The computer driver 230 may be preinstalled on the memory 220 or may be downloadable, and then storable by the memory 220, from the internet and/or from a compact disk and/or a USB stick and/or from any other suitable source. In some examples, the memory 220 is located in the peripheral device 300 and not in the computer 200.

The processor 210 may be configured to execute instructions stored by the memory 220 and/or process signals received from the first and/or second sensor (described below) and/or the peripheral device 300. The computer program to be detected by the computer computer 200 may be any program that is executable by the processor 210. The computer program may be a file editor and/or a computer-aided drawing, CAD, program and/or an internet browser and/or a video game and/or a computer repair tool and/or any program executable by the processor 210.

In this example, the computer driver 230 is configured to detect a computer program being at least partially resident in the memory 220. The computer 200 and/or the processor 210 and/or the memory 220 may also undertake the steps of the methods 100, 100', 100" described herein that are assigned to said computer driver 230.

In some examples, the memory 220 and processor 210 are configured to periodically communicate with a cloud storage medium and store the limiting parameters and/or the limits put in place by the computer 200 and/or computer driver 230 and/or the user and/or the at least one threshold value in the cloud storage medium. This may allow for the limiting parameters and/or the limits put in place by the computer 200 and/or computer driver 230 and/or the user and/or the at least one threshold value to be stored in the cloud, thereby allowing for the assignments to be maintained if the peripheral device is transferred to a second computer. This may allow for a user to maintain their customized preferences across devices. The user may access the cloud stored the limiting parameters and/or the limits put in place by the computer 200 and/or computer driver 230 and/or the user and/or the at least one threshold value via a user account on a website. The computer driver 230 and/or processor 210 and/or memory 220 may also be coupled to this same account for easy storage and/or retrieval of the limiting parameters and/or the limits put in place by the computer driver 230 and/or the user and/or the at least one threshold value on a second computer.

In this example, the computer 200 also comprises the at least one threshold value 240. This at least one threshold value 240 may be stored in the memory 220 and/or stored via any other storage medium described herein. In some examples, the at least one threshold value 240 is stored in a location accessible by the processor 210 and/or memory 220 in order to undertake at least the comparison S120 step described above and additionally or alternatively, any other steps mentioned herein that involve the at least one threshold value 240.

In some examples, computer 200 further comprises a transceiver 250. The transceiver 250 may, in some examples, be used to transmit S180 the command to the peripheral device relating to the alteration of the state of the light on the peripheral device 300. In some examples, the transceiver 260 is further suitable for Bluetooth devices to be coupled to the computer 200. Bluetooth devices may be, for example, keyboards, numeric keypads, mice, microphones, headphones or any other Bluetooth compatible device. In some examples, the computer 200 further comprises a USB interface 260 for USB devices to be coupled to the computer 200. USB devices may be, for example, keyboards, numeric keypads, mice, microphones or any other USB compatible device.

In some examples, the computer 200 further comprises an HDMI/DVI/D-SUB interface for HDMI/DVI/D-SUB compatible devices, such as monitors, to be coupled to the computer 200. Each of the USB interface 260, the transceiver 250 and the HDMI/DVI/D-SUB interface may be coupled to the computer 200. This may then allow for the computer driver 230, the memory 220 and the processor 210 to interact with the peripheral devices 300 as described in the present disclosure.

The peripheral device 300, in this example, comprises a proximity sensor and an ambient light sensor, also respectively described as a first sensor and a second sensor in the present disclosure. The first and second sensors may have the characteristics as described above that allow for the method 100, 100', 100" to be undertaken.

The battery 330 of the peripheral device 300 may be needed if the peripheral device 300 is a wireless device. The battery 330 may be any commercially available battery or may be a bespoke battery. The battery 330 may be a rechargeable battery, rechargeable via a charging cable being inserted into the peripheral device 300, wherein the cable port and the battery 330 are electronically coupled and/or the battery 330 may be taken out of the peripheral device 300 to be recharged. In some examples, the battery 330 is not rechargeable and is replaced when needed.

The transceiver 340 of the peripheral device 300 may be similar to the transceiver 250 described above in relation to the computer 200. The transceiver may be able to receive the commands transmitted by the transmitter 250 of the computer 200. Additionally or alternatively, the transceiver 340 of the peripheral device 300 may send information, to the computer 200, about a state of the light (described below) and/or a state of the first 310 and/or second 320 sensors and/or the battery 330 of the peripheral device 300. This information may then be used by the computer 200 in the comparison S120 step in order to compare the state of the first 310 and/or second 320 sensor with the at least one threshold value 240.

The peripheral device 300 further comprises a processing unit 350 comprising a memory and a processor. The processor and the memory may be similar to the processor 210 and memory 220 of the computer 200. In some examples, the execution of the command is undertaken by the processing unit 350. In some examples, any information described as being "stored" above may be at least partially stored in the memory of the processing unit 350 and/or via any other method described herein.

The peripheral device also comprises a light 360, as will be described in more detail below.

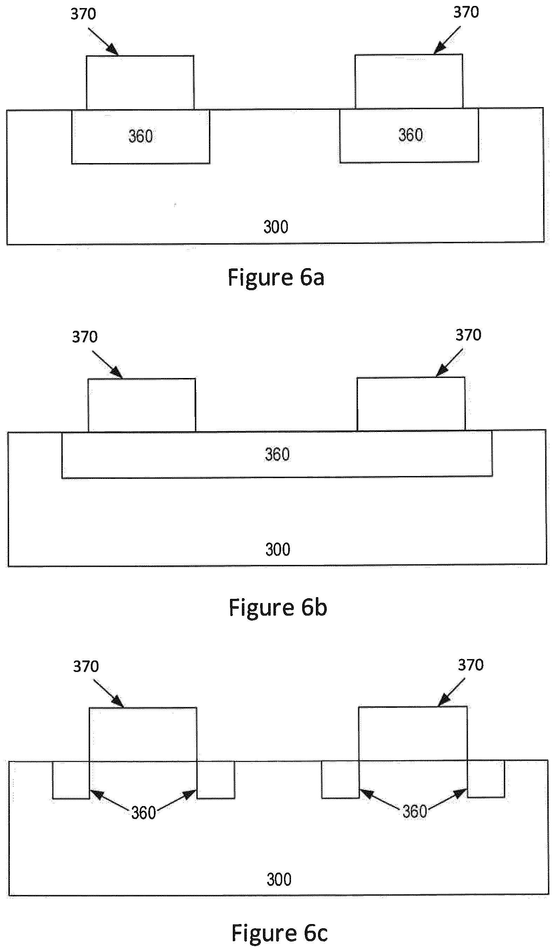

Figs 6a, b and c show schematic illustrations of a peripheral device according to some examples as described herein.

The light 360 on the peripheral device 300 comprises at least one of a light emitting diode, LED, an organic light emitting diode, OLED, and a quantum dot, QD, display. The light 360 may be any suitable light emitting element which is able to be turned on and off and/or be able to have the intensity of said light 360 be increased or decreased dependent on the command executed by the processor 210. In some examples, the light is a white light or an RGB light. The use of an RGB light may allow for the color of the light to be altered, automatically by the computer 200 and/or computer driver 230 and/or via an input by the user, dependent on the program such as, for example, a predominantly yellow light being used during the use of a first computer program and a predominantly purple light being used during the use of a second computer program. This may allow for the state of the light to be customizable dependent on the detected computer program.

In some examples, the light 360 is configured to backlight an actuator 370 on the peripheral device 300, and/or wherein the light 360 is a white light or an RGB light, and/or wherein the computer 200 removes or reduces the blue light of the RGB light during night time hours to reduce eye strain. In some examples, the removal or reduction step is undertaken by the processor 210 and/or the memory 220 and/or the computer driver 230 and/or via interactions between at least two of these features. The (back)light 360 may allow for one or more actuators 370 on the first peripheral device to be highlighted by said (back)light. This may result in the one or more actuators 370 to be spotted by the user and/or indicated by the peripheral device 300 in an easier manner. The reduction of blue light in the RGB light may result in a reduction in eye strain during the night time hours, thereby improving the eye health of the user. The computer 200 and/or the at least one threshold value 240 may comprise an instruction relating to the RGB components of the RGB light and may reduce the blue component as a result of a user input and/or as a result of a predetermined threshold by the computer 200. In some examples, the above actuator 370 may be located on the computer 200.

In some examples, the intensity of the light 360 is configured to change when the actuator 370 is actuated, wherein the value to which the intensity of the light 360 is changed to is determined by the computer 200 or the user. This may allow for the user to more accurately see which actuator 370 has been actuated during use of the peripheral device 300, thereby improving the accuracy of the use of the peripheral device 300.

Figs 6a, b and c show various layouts of lights 360 on the peripheral device 300.

In each of the Figs, a cutaway view of the peripheral device 300 is shown, such that each actuator 370 shown represents a row and/or a column of actuators 370 on the peripheral device 300.

In Fig. 6a, a single light 360 is underneath the entirety of each row of actuators 360. This may allow for each row of actuators 370 to have its own set of parameters, as described above and/or allow for the light 360 under each row of actuators 370 to have its own state dependent on the computer 200 and/or the user of the peripheral device 300. In some examples, each actuator 370 has its own light 360, thereby each actuator 370 could have a light 360 with its own individual state.

In Fig. 6b, there is a single light 360 underneath all actuators 370. This may allow for the state of the light 360 to be uniform across the entire peripheral device 300.

In Fig. 6c, each row of actuators 370 is assigned two lights 360 on two opposite sides of said actuator 370 as a form of light strip. This may allow, similarly to the example of Fig. 6a, for each row of actuators 370 to have its own set of parameters, as described above and/or allow for the light 360 under each row of actuators 370 to have its own state dependent on the computer 200 and/or the user of the peripheral device 300. In some examples, the two light strips are applied to each individual actuator 370. In some examples, there is only one light strip on each row of actuators 370, or on each individual actuator 370. In some examples, individual actuators 370 and/or rows of actuators 370 may have differing numbers and/or lengths of light strips. In some examples, each light strip has its own state.

The variants described above are merely intended to provide a better understanding of the structure, the mode of operation and the properties; they do not limit the disclosure to the embodiments. The Figs are partly schematic, with essential properties and effects being shown partly enlarged in order to clarify the functions, operating principles, technical concepts and features.

## Claims

1. A method (100, 100', 100") for altering a state of a light (360) on a first peripheral device (300) of a computer (200), the computer (200) including a processor (210), a memory (220) accessible by the processor (210) and the first peripheral device (300), wherein the first peripheral device (300) comprises a first sensor (310) configured to sense a proximity of a user to the first peripheral device (300) and a second sensor (320) configured to determine an ambient light level in an area surrounding the first peripheral device (300), the method (100, 100', 100") comprising:
receiving (S110), by the computer (200), an output from the first sensor (310) relating to the proximity of the user to the first peripheral device (300) and/or an output from the second sensor (320) relating to the ambient light level in the area surrounding the first peripheral device (300);
comparing (S120), by the computer (200), the output from the first sensor (310) and/or the second sensor (320) with at least one threshold value (240), wherein the at least one threshold value (240) comprises at least one predetermined value relating to the output of the first sensor (310) and at least one predetermined value relating to the output of the second sensor (320);
receiving (S160), by the computer (200), an indication if the at least one threshold value (240) has been exceeded; and
if the at least one threshold value (240) has been exceeded, executing (S170), by the computer (200), a command relating to the altering of the state of the light (360) on the first peripheral device (300) depending on the exceeded at least one threshold value (240), wherein the state of the light (360) relates to an on or off state of the light (360) and/or an intensity of the light (360),
wherein the computer (200) is further configured to alter the at least one threshold value (240) based on a first computer program or a second computer program detected by the computer (200), in particular wherein the computer (200) is configured to increase a sensitivity of the first sensor (310) and/or the second sensor (320) when the first computer program is detected, and/or decrease the sensitivity of the first sensor (310) and/or the second sensor (320) when the second computer program is detected, and in particular wherein the first computer program is a computer-aided design, CAD, program and the second computer program is a video game program and/or a virtual reality, VR, video game program.

2. The method (100, 100', 100") as claimed in claim 1, wherein the first sensor (310) is a capacitive, optical, or an infrared sensor, and/or wherein the first sensor (310) is located on a keyboard, a numerical keypad or a 2D or 3D input device.

3. The method (100, 100', 100") as claimed in any one of the preceding claims,
wherein the light (360) on the first peripheral device (300) comprises at least one of a light emitting diode, LED, an organic light emitting diode, OLED, and a quantum dot, QD, display; and/or
wherein the at least one threshold value (240) is stored in at least one of a lookup table, a hash table, a branch table and a matrix and/or wherein the command relating to the altering of the state of the light (360) is a command relating to a turning off or a turning on of the light on the first peripheral device (300); and/or a change in the intensity of the light (360) on the first peripheral device (300) from a first value to a second value, wherein the second value is based on the at least one threshold value (240).

4. The method (100, 100', 100") as claimed in any one of the preceding claims, further comprising:
receiving (S210), by the computer (200) from a second peripheral device, a first input from a user, wherein the first input comprises at least one alteration to the at least one threshold value (240);
changing (S220), by the computer (200), the at least one threshold value (240) from a first value to a second value, wherein the second value is the value of the at least one threshold value (240) after the changing of the at least one threshold value (240); and
storing (S230) the second value of the at least one threshold value (240), in particular wherein the first input comprises the addition of at least one further threshold value;
and/or further comprising:
receiving (S250), by the computer (200) from a third peripheral device, a second input from the user, wherein the second input comprises at least one alteration to a parameter relating to the first sensor (310) and/or the second sensor (320);
changing (S260), by the computer (200), the parameter from a first value to a second value, wherein the second value is the value of the parameter after the changing of the parameter; and
storing (S270) the second value of the parameter,
wherein a limiting parameter relates to a change in a sensing parameter of the first sensor (310) and/or the second sensor (320), in particular wherein the second input comprises the increase or decrease of the sensitivity the first sensor (310) and/or the second sensor (320),
in particular wherein at least two of the first peripheral device (300), the second peripheral device and the third peripheral device are the same peripheral device.

5. The method (100, 100', 100") as claimed in any one of the preceding claims, further comprising:
receiving (S130), by the computer (200), a third input from a user, wherein the third input comprises at least one limiting parameter relating to the first sensor (310) and/or the second sensor (320);
storing (S140) the at least one limiting parameter; and
limiting (S150) the at least one threshold value (240) so the said at least one threshold value (240) cannot be compared by the computer (200),
wherein the limiting parameter relates to a change in a sensing parameter of the first sensor (310) and/or the second sensor (320).

6. The method (100, 100', 100") as claimed in claim 5, wherein the at least one limiting parameter relates to a duration of the light (360) on the first peripheral device (300) being on and/or the intensity of the light (360) on the first peripheral device (300); and/or
wherein the at least one limiting parameter relates to a sensitivity of the first sensor (310) and/or second sensor (320); and/or
wherein the at least one limiting parameter can override the command relating to the altering of the state of the light (360) on the first peripheral device (300) if the computer (200) receives the indication that the at least one threshold value (240) has been exceeded; and/or
wherein the output from the first sensor (310) and/or the output from the second sensor (320) are not compared with the at least one threshold value (240) due to the at least one limiting parameter; and/or
wherein the computer is further configured to receive a value relating to a battery charge status of the first peripheral device (300), and wherein the at least one threshold value (240) further comprises at least one value relating to the battery charge status of the first peripheral device (300), in particular wherein the at least one limiting parameter relates to the battery charge status of the first peripheral device (300).

7. The method (100, 100', 100") as claimed in claim 5, wherein the computer (200) is further configured to receive a local time of the computer (200) from the processor (210), and wherein the at least one threshold value (240) further comprises at least one value relating to the local time, and/or the computer (200) is further configured to retrieve a sunrise and/or a sunset time from an external website, and wherein the at least one threshold value (240) further comprises at least one value relating to the sunrise and/or sunset time, in particular wherein the at least one limiting parameter relates to the local time of the computer (200) and/or the sunrise and/or sunset time, and wherein the at least one limiting parameter relates to an altering of the intensity of the light (360).

8. The method (100, 100', 100") as claimed in any one of the preceding claims, wherein the computer (200) further comprises a transmitter (250) and the method further comprises:
transmitting (S180), by the computer (200), to the first peripheral device (300), the command relating to the altering of the state of the light (360) on the first peripheral device (300) if the computer (200) receives the indication that the at least one threshold value (240) has been exceeded.

9. The method (100, 100', 100") as claimed in any one of the preceding claims, wherein the light (360) is configured to backlight an actuator (370) on the first peripheral device (300), and/or wherein the light (360) is a white light or an RGB light, and/or wherein the computer (200) removes or reduces the blue light of the RGB light during night time hours to reduce eye strain, in particular wherein the intensity of the light (360) is configured to change from the first value to a third value or the second value to the third value when the actuator (370) is actuated, wherein the third value is determined by the computer (200) or the user.

10. The method (100, 100', 100") as claimed in any one of the preceding claims, wherein the second sensor (320) is configured to remove at least one component relating to light output by a monitor coupled to the computer (200) and determine the ambient light level of the area surrounding the first peripheral device (300) without the at least one component relating to light output by the monitor.

11. A computer system for altering a state of a light (360) on a first peripheral device (300) of a computer comprising means for carrying out the method (100, 100', 100") of any one of claims 1 to 10.

12. The computer system as claimed in claim 11 comprising:
a computer driver (230) configured to carry out the method (100, 100', 100") as claimed in any one of claims 1 to 10; and
the first peripheral device (300), wherein the first peripheral device (300) further comprises a processor (210, 350), wherein a memory (220) is configured to store the computer driver (230), and wherein the processor (210, 350) is configured to execute a computer driver instruction from the memory (220).

13. A computer program comprising a computer driver (230) for altering a state of a light (360) on a first peripheral device (300) of a computer (200), the computer (200) including a processor (210), a memory (220) accessible by the processor (210) and the first peripheral device (300), wherein the computer program comprises instructions which, when the computer program is carried out by the computer, cause the computer (200) to carry out:
detecting the first peripheral device (300) comprising a first sensor (310) configured to sense a proximity of a user to the first peripheral device and a second sensor (320) configured to determine an ambient light level in an area surrounding the first peripheral device (300);
receiving (S110) an output from the first sensor (310) relating to the proximity of the user to the first peripheral device and/or an output from the second sensor (320) relating to the ambient light level in the area surrounding the first peripheral device (300);
comparing (S120) the output from the first sensor (310) and/or the second sensor (320) with at least one threshold value (240), wherein the at least one threshold value comprises at least one predetermined value relating to the output of the first sensor (310) and at least one predetermined value relating to the output of the second sensor (320);
receiving (S160) an indication if the at least one threshold value has been exceeded; and if the at least one threshold value has been exceeded, executing (S170) a command relating to the altering of the state of the light (360) on the first peripheral device (300) depending on the exceeded at least one threshold value, wherein the state of the light (360) relates to an on or off state of the light (360) and/or an intensity of the light (360),
wherein the computer (200) is further configured to alter the at least one threshold value (240) based on a first computer program or a second
computer program detected by the computer (200), in particular wherein the computer (200) is configured to increase a sensitivity of the first sensor (310) and/or the second sensor (320) when the first computer program is detected,
and/or decrease the sensitivity of the first sensor (310) and/or the second sensor (320) when the second computer program is detected, and in particular wherein the first computer program is a computer-aided design, CAD, program and the second computer program is a video game program and/or a virtual reality, VR, video game program.

14. A computer-readable storage medium comprising instructions which, when executed by a computer (200), cause the computer (200) to carry out the method (100, 100', 100") of any one of claims 1 to 10.

## Patentansprüche

1. Ein Verfahren (100, 100', 100") zum Ändern eines Zustands einer Leuchte (360) an einem ersten Peripheriegerät (300) eines Computers (200), wobei der Computer (200) einen Prozessor (210) und einen Speicher (220) umfasst, auf den der Prozessor (210) und das erste Peripheriegerät (300) zugreifen können, wobei das erste Peripheriegerät (300) einen ersten Sensor (310), der so konfiguriert ist, dass er die Nähe eines Benutzers zum ersten Peripheriegerät (300) erfasst, und einen zweiten Sensor (320) umfasst, der so konfiguriert ist, dass er einen Umgebungslichtpegel in einem Bereich um das erste Peripheriegerät (300) herum bestimmt, wobei das Verfahren (100, 100', 100") umfasst:
Empfangen (S110) einer Ausgabe des ersten Sensors (310), die sich auf die Nähe des Benutzers zum ersten Peripheriegerät (300) bezieht, und/oder einer Ausgabe des zweiten Sensors (320), die sich auf die Umgebungslichtstärke in dem Bereich um das erste Peripheriegerät (300) herum bezieht, durch den Computer (200);
Vergleichen (S120) durch den Computer (200) des ersten Sensors (310) und/oder des zweiten Sensors (320) mit mindestens einem Schwellenwert (240), wobei der mindestens eine Schwellenwert (240) mindestens einen vorbestimmten Wert in Bezug auf den Ausgang des ersten Sensors (310) und mindestens einen vorbestimmten Wert in Bezug auf den Ausgang des zweiten Sensors (320) umfasst;
Empfangen (S160) einer Angabe durch den Computer (200), ob der mindestens eine Schwellenwert (240) überschritten wurde; und
wenn der mindestens eine Schwellenwert (240) überschritten wurde, Ausführen (S170) durch den Computer (200) einen Befehl, der sich auf die Änderung des Zustands der Leuchte (360) an dem ersten Peripheriegerät (300) in Abhängigkeit von dem überschrittenen mindestens einen Schwellenwert (240) bezieht, wobei sich der Zustand der Leuchte (360) auf einen Ein- oder Aus-Zustand der Leuchte (360) und/oder eine Intensität der Leuchte (360) bezieht,
wobei der Computer (200) ferner so konfiguriert ist, dass er den mindestens einen Schwellenwert (240) auf der Grundlage eines ersten Computerprogramms oder eines zweiten Computerprogramms ändert, das vom Computer (200) erkannt wurde, wobei insbesondere der Computer (200) so konfiguriert ist, dass er die Empfindlichkeit des ersten Sensors (310) und/oder des zweiten Sensors (320) zu erhöhen, wenn das erste Computerprogramm erkannt wird, und/oder die Empfindlichkeit des ersten Sensors (310) und/oder des zweiten Sensors (320) zu verringern, wenn das zweite Computerprogramm erkannt wird, und insbesondere wobei das erste Computerprogramm ein CAD-Programm (Computer-Aided Design) ist und das zweite Computerprogramm ein Videospielprogramm und/oder ein VR-Videospielprogramm (Virtual Reality) ist.

2. Das Verfahren (100, 100', 100") nach Anspruch 1, wobei der erste Sensor (310) ein kapazitiver, optischer oder ein Infrarotsensor ist und/oder wobei der erste Sensor (310) auf einer Tastatur, einem Ziffernblock oder einem 2D- oder 3D-Eingabegerät angeordnet ist.

3. Das Verfahren (100, 100', 100") nach einem der vorstehenden Ansprüche, wobei die Leuchte (360) auf dem ersten Peripheriegerät (300) mindestens eines von einer Leuchtdiode, LED, einer organischen Leuchtdiode, OLED, und einem Quantenpunkt, QD, Display umfasst; und/oder
wobei der mindestens eine Schwellenwert (240) in mindestens einer der folgenden Tabellen gespeichert ist: einer Nachschlagetabelle, einer Hash-Tabelle, einer Verzweigungstabelle und einer Matrix, und/oder wobei der Befehl zum Ändern des Zustands der Leuchte (360) ein Befehl zum Ein- oder Ausschalten des Lichts auf dem ersten Peripheriegerät (300) ist; und/oder
eine Änderung der Intensität der Leuchte (360) auf dem ersten Peripheriegerät (300) von einem ersten Wert zu einem zweiten Wert, wobei der zweite Wert auf dem mindestens einen Schwellenwert (240) basiert.

4. Das Verfahren (100, 100', 100") nach einem der vorstehenden Ansprüche, das ferner umfasst:
Empfangen (S210) einer ersten Eingabe von einem Benutzer durch den Computer (200) von einem zweiten Peripheriegerät, wobei die erste Eingabe mindestens eine Änderung des mindestens einen Schwellenwerts (240) umfasst;
Ändern (S220) des mindestens einen Schwellenwerts (240) durch den Computer (200) von einem ersten Wert in einen zweiten Wert, wobei der zweite Wert der Wert des mindestens einen Schwellenwerts (240) nach dem Ändern des mindestens einen Schwellenwerts (240) ist; und
Speichern (S230) des zweiten Wertes des mindestens einen Schwellenwertes (240), wobei insbesondere die erste Eingabe das Hinzufügen mindestens eines weiteren Schwellenwertes umfasst;
und/oder ferner umfassend:
Empfangen (S250) einer zweiten Eingabe vom Benutzer durch den Computer (200) von einer dritten Peripherievorrichtung, wobei die zweite Eingabe mindestens eine Änderung eines Parameters umfasst, der sich auf den ersten Sensor (310) und/oder den zweiten Sensor (320) bezieht;
Ändern (S260) des Parameters durch den Computer (200) von einem ersten Wert in einen zweiten Wert, wobei der zweite Wert der Wert des Parameters nach dem Ändern des Parameters ist; und
Speichern (S270) des zweiten Wertes des Parameters,
wobei ein Begrenzungsparameter sich auf eine Änderung eines Erfassungsparameters des ersten Sensors (310) und/oder des zweiten Sensors (320) bezieht, insbesondere wobei die zweite Eingabe die Erhöhung oder Verringerung der Empfindlichkeit des ersten Sensors (310) und/oder des zweiten Sensors (320) umfasst,
insbesondere wobei mindestens zwei der ersten Peripherievorrichtung (300), der zweiten Peripherievorrichtung und der dritten Peripherievorrichtung dieselbe Peripherievorrichtung sind.

5. Das Verfahren (100, 100', 100") nach einem der vorstehenden Ansprüche, das ferner umfasst:
Empfangen (S130) einer dritten Eingabe von einem Benutzer durch den Computer (200), wobei die dritte Eingabe mindestens einen Begrenzungsparameter umfasst, der sich auf den ersten Sensor (310) und/oder den zweiten Sensor (320) bezieht;
Speichern (S140) des mindestens einen Begrenzungsparameters; und
Begrenzen (S150) des mindestens einen Schwellenwerts (240), so dass der mindestens eine Schwellenwert (240) nicht durch den Computer (200) verglichen werden kann,
wobei der Begrenzungsparameter sich auf eine Änderung eines Erfassungsparameters des ersten Sensors (310) und/oder des zweiten Sensors (320) bezieht.

6. Das Verfahren (100, 100', 100") gemäß Anspruch 5, wobei sich der mindestens eine Begrenzungsparameter auf eine Dauer der Leuchte (360) auf dem ersten peripheren Gerät (300) bezieht, das eingeschaltet ist, und/oder auf die Intensität der Leuchte (360) auf dem ersten peripheren Gerät (300); und/oder wobei sich der mindestens eine Begrenzungsparameter auf eine Empfindlichkeit des ersten Sensors (310) und/oder des zweiten Sensors (320) bezieht; und/oder wobei der mindestens eine Begrenzungsparameter den Befehl zum Ändern des Zustands der Leuchte (360) auf dem ersten Peripheriegerät (300) außer Kraft setzen kann, wenn der Computer (200) die Anzeige empfängt, dass der mindestens eine Schwellenwert (240) überschritten wurde; und/oder
wobei die Ausgabe des ersten Sensors (310) und/oder die Ausgabe des zweiten Sensors (320) aufgrund des mindestens einen Begrenzungsparameters nicht mit dem mindestens einen Schwellenwert (240) verglichen werden; und/oder
wobei der Computer ferner so konfiguriert ist, dass er einen Wert empfängt, der sich auf einen Batterieladestatus des ersten Peripheriegeräts (300) bezieht, und wobei der mindestens eine Schwellenwert (240) ferner mindestens einen Wert umfasst, der sich auf den Batterieladestatus des ersten Peripheriegeräts (300) bezieht, wobei insbesondere der mindestens eine Begrenzungsparameter sich auf den Batterieladestatus des ersten Peripheriegeräts (300) bezieht.

7. Das Verfahren (100, 100', 100") nach Anspruch 5, wobei der Computer (200) ferner so konfiguriert ist, dass er eine Ortszeit des Computers (200) vom Prozessor (210) empfängt, und wobei der mindestens eine Schwellenwert (240) ferner mindestens einen Wert umfasst, der sich auf die Ortszeit bezieht, und/oder der Computer (200) ferner dazu konfiguriert ist, eine Sonnenaufgangs- und/oder Sonnenuntergangszeit von einer externen Website abzurufen, und wobei der mindestens eine Schwellenwert (240) ferner mindestens einen Wert umfasst, der sich auf die Sonnenaufgangs- und/oder Sonnenuntergangszeit bezieht, wobei insbesondere der mindestens eine Begrenzungsparameter sich auf die Ortszeit des Computers (200) und/oder die Sonnenaufgangs- und/oder Sonnenuntergangszeit bezieht, und wobei der mindestens eine Begrenzungsparameter sich auf eine Änderung der Intensität der Leuchte (360) bezieht.

8. Das Verfahren (100, 100', 100") nach einem der vorstehenden Ansprüche, wobei der Computer (200) ferner einen Sender (250) umfasst und das Verfahren ferner umfasst:
Senden (S180) des Befehls, der sich auf die Änderung des Zustands des Lichts (360) auf dem ersten Peripheriegerät (300) bezieht, durch den Computer (200) an das erste Peripheriegerät (300), wenn der Computer (200) die Anzeige empfängt, dass der mindestens eine Schwellenwert (240) überschritten wurde.

9. Das Verfahren (100, 100', 100") nach einem der vorstehenden Ansprüche, wobei die Leuchte (360) so konfiguriert ist, dass es einen Aktuator (370) auf dem ersten Peripheriegerät (300) hinterleuchtet, und/oder wobei die Leuchte (360) eine weiße Leuchte oder eine RGB-Leuchte ist, und/oder wobei der Computer (200) das blaue Licht der RGB-Leuchte während der Nachtstunden entfernt oder reduziert, um die Augenbelastung zu verringern, wobei insbesondere die Intensität der Leuchte (360) so konfiguriert ist, dass sie sich von dem ersten Wert zu einem dritten Wert oder von dem zweiten Wert zu dem dritten Wert ändert, wenn der Aktuator (370) betätigt wird, wobei der dritte Wert durch den Computer (200) oder den Benutzer bestimmt wird.

10. Das Verfahren (100, 100', 100") nach einem der vorstehenden Ansprüche, wobei der zweite Sensor (320) so konfiguriert ist, dass er mindestens eine Komponente, die sich auf die Lichtleistung eines mit dem Computer (200) gekoppelten Monitors bezieht, entfernt und den Umgebungslichtpegel des Bereichs um das erste Peripheriegerät (300) ohne die mindestens eine Komponente, die sich auf die Lichtleistung des Monitors bezieht, bestimmt.

11. Ein Computersystem zum Ändern eines Zustands einer Leuchte (360) an einem ersten Peripheriegerät (300) eines Computers, das Mittel zum Ausführen des Verfahrens (100, 100', 100") nach einem der Ansprüche 1 bis 10 umfasst.

12. Das Computersystem nach Anspruch 11, umfassend:
einen Computertreiber (230), der so konfiguriert ist, dass er das Verfahren (100, 100', 100") gemäß einem der Ansprüche 1 bis 10 ausführt; und
das erste Peripheriegerät (300), wobei das erste Peripheriegerät (300) ferner einen Prozessor (210, 350) umfasst, wobei ein Speicher (220) zum Speichern des Computertreibers (230) konfiguriert ist und wobei der Prozessor (210, 350) zum Ausführen einer Computertreiberanweisung aus dem Speicher (220) konfiguriert ist.

13. Ein Computerprogramm, das einen Computertreiber (230) zum Ändern eines Zustands einer Leuchte (360) an einem ersten Peripheriegerät (300) eines Computers (200) umfasst, wobei der Computer (200) einen Prozessor (210) und einen Speicher (220) umfasst, auf den der Prozessor (210) und das erste Peripheriegerät (300) zugreifen können, wobei das Computerprogramm Befehle umfasst, die, wenn das Computerprogramm vom Computer ausgeführt wird, den Computer (200) dazu veranlassen, Folgendes auszuführen:
Erfassen des ersten Peripheriegeräts (300), das einen ersten Sensor (310), der so konfiguriert ist, dass er die Nähe eines Benutzers zum ersten Peripheriegerät erfasst, und einen zweiten Sensor (320) umfasst, der so konfiguriert ist, dass er einen Umgebungslichtpegel in einem Bereich um das erste Peripheriegerät (300) herum bestimmt;
Empfangen (S110) einer Ausgabe vom ersten Sensor (310) bezüglich der Nähe des Benutzers zum ersten Peripheriegerät und/oder einer Ausgabe vom zweiten Sensor (320) bezüglich der Umgebungslichtstärke in dem Bereich, der das erste Peripheriegerät (300) umgibt;
Vergleichen (S120) der Ausgabe des ersten Sensors (310) und/oder des zweiten Sensors (320) mit mindestens einem Schwellenwert (240), wobei der mindestens eine Schwellenwert mindestens einen vorbestimmten Wert in Bezug auf die Ausgabe des ersten Sensors (310) und mindestens einen vorbestimmten Wert in Bezug auf die Ausgabe des zweiten Sensors (320) umfasst;
Empfangen (S160) einer Anzeige, ob der mindestens eine Schwellenwert überschritten wurde; und
wenn der mindestens eine Schwellenwert überschritten wurde, Ausführen (S170) eines Befehls, der sich auf das Ändern des Zustands der Leuchte (360) an dem ersten Peripheriegerät (300) in Abhängigkeit von dem überschrittenen mindestens einen Schwellenwert bezieht, wobei sich der Zustand der Leuchte (360) auf einen Ein- oder Aus-Zustand der Leuchte (360) und/oder eine Intensität der Leuchte (360) bezieht,
wobei der Computer (200) ferner so konfiguriert ist, dass er den mindestens einen Schwellenwert (240) auf der Grundlage eines ersten Computerprogramms oder eines zweiten Computerprogramms ändert, das vom Computer (200) erkannt wurde, wobei insbesondere der Computer (200) so konfiguriert ist, dass er eine Empfindlichkeit des ersten Sensors (310) und/oder des zweiten Sensors (320) erhöht, wenn das erste Computerprogramm erkannt wird, und/oder die Empfindlichkeit des ersten Sensors (310) und/oder des zweiten Sensors (320) verringert, wenn das zweite Computerprogramm erkannt wird. (320) zu erhöhen, wenn das erste Computerprogramm erkannt wird, und/oder die Empfindlichkeit des ersten Sensors (310) und/oder des zweiten Sensors (320) zu verringern, wenn das zweite Computerprogramm erkannt wird, und insbesondere wobei das erste Computerprogramm ein computergestütztes Konstruktionsprogramm (CAD) ist und das zweite Computerprogramm ein Videospielprogramm und/oder ein Virtual-Reality-Videospielprogramm (VR) ist.

14. Ein computerlesbares Speichermedium, das Anweisungen enthält, die, wenn sie von einem Computer (200) ausgeführt werden, den Computer (200) veranlassen, das Verfahren (100, 100', 100") gemäß einem der Ansprüche 1 bis 10 auszuführen.

## Revendications

1. Une méthode (100, 100', 100") pour modifier l'état d'une lumière (360) sur un premier périphérique (300) d'un ordinateur (200), l'ordinateur (200) comprenant un processeur (210), une mémoire (220) accessible par le processeur (210) et le premier périphérique (300), dans lequel le premier périphérique (300) comprend un premier capteur (310) configuré pour détecter la proximité d'un utilisateur par rapport au premier dispositif périphérique (300) et un deuxième capteur (320) configuré pour déterminer un niveau de lumière ambiante dans une zone entourant le premier dispositif périphérique (300), le procédé (100, 100', 100") comprenant:
recevoir (S110), par l'ordinateur (200), d'une sortie provenant du premier capteur (310) relative à la proximité de l'utilisateur par rapport au premier dispositif périphérique (300) et/ou d'une sortie provenant du deuxième capteur (320) relative au niveau de lumière ambiante dans la zone entourant le premier dispositif périphérique (300);
comparer (S120), par l'ordinateur (200), la sortie du premier capteur (310) et/ou du deuxième capteur (320) avec au moins une valeur seuil (240), dans lequel la au moins une valeur seuil (240) comprend au moins une valeur prédéterminée relative à la sortie du premier capteur (310) et au moins une valeur prédéterminée relative à la sortie du deuxième capteur (320);
recevoir (S160), par l'ordinateur (200), une indication si la au moins une valeur seuil (240) a été dépassée; et
si la au moins une valeur seuil (240) a été dépassée, exécuter (S170), par l'ordinateur (200), une commande relative à la modification de l'état de la lumière (360) sur le premier dispositif périphérique (300) en fonction de la ou des valeurs seuils (240) dépassées, dans lequel l'état de la lumière (360) se rapporte à un état allumé ou éteint de la lumière (360) et/ou à une intensité de la lumière (360),
dans lequel l'ordinateur (200) est en outre configuré pour modifier la au moins une valeur seuil (240) sur la base d'un premier programme informatique ou d'un deuxième programme informatique détecté par l'ordinateur (200), en particulier dans lequel l'ordinateur (200) est configuré pour augmenter la sensibilité du premier capteur (310) et/ou du deuxième capteur (320) lorsque le premier programme informatique est détecté, et/ou de diminuer la sensibilité du premier capteur (310) et/ou du deuxième capteur (320) lorsque le deuxième programme informatique est détecté, et en particulier dans lequel le premier programme informatique est un programme de conception assistée par ordinateur, CAO, et le deuxième programme informatique est un programme de jeu vidéo et/ou un programme de jeu vidéo de réalité virtuelle, RV.

2. La méthode (100, 100', 100") selon la revendication 1, dans laquelle le premier capteur (310) est un capteur capacitif, optique ou infrarouge, et/ou dans lequel le premier capteur (310) est situé sur un clavier, un pavé numérique ou un dispositif d'entrée 2D ou 3D.

3. La méthode (100, 100', 100") dans laquelle l'une quelconque des revendications précédentes, dans lequel la lumière (360) sur le premier dispositif périphérique (300) comprend au moins l'un d'un dispositif d'affichage à diode électroluminescente, LED, à diode électroluminescente organique, OLED, et à points quantiques, QD ; et/ou
dans laquelle la au moins une valeur seuil (240) est stockée dans au moins l'un d'une table de consultation, d'une table de hachage, d'une table de branchement et d'une matrice et/ou dans lequel la commande relative à la modification de l'état de la lumière (360) est une commande relative à l'extinction ou à l'allumage de la lumière sur le premier dispositif périphérique (300) ; et/ou
un changement de l'intensité de la lumière (360) sur le premier dispositif périphérique (300) d'une première valeur à une deuxième valeur, dans lequel la deuxième valeur est basée sur la au moins une valeur seuil (240).

4. La méthode (100, 100', 100") dans laquelle l'une quelconque des revendications précédentes, comprenant en outre:
recevoir (S210), par l'ordinateur (200) à partir d'un deuxième périphérique, d'une première entrée provenant d'un utilisateur, dans lequel la première entrée comprend au moins une modification de la au moins une valeur seuil (240);
modifier (S220), par l'ordinateur (200), de la au moins une valeur seuil (240) d'une première valeur à une deuxième valeur, dans lequel la deuxième valeur est la valeur de la au moins une valeur seuil (240) après la modification de la au moins une valeur seuil (240); et
stocker (S230) la deuxième valeur de la au moins une valeur seuil (240), en particulier dans lequel la première entrée comprend l'ajout d'au moins une autre valeur seuil;
et/ou comprenant en outre:
recevoir (S250), par l'ordinateur (200) à partir d'un troisième dispositif périphérique, d'une deuxième entrée provenant de l'utilisateur, dans lequel la deuxième entrée comprend au moins une modification d'un paramètre relatif au premier capteur (310) et/ou au deuxième capteur (320);
modifier (S260), par l'ordinateur (200), du paramètre d'une première valeur à une deuxième valeur, dans lequel la deuxième valeur est la valeur du paramètre après la modification du paramètre; et
stocker (S270) la deuxième valeur du paramètre,
dans lequel un paramètre limite est lié à une modification d'un paramètre de détection du premier capteur (310) et/ou du deuxième capteur (320), en particulier dans lequel la deuxième entrée comprend l'augmentation ou la diminution de la sensibilité du premier capteur (310) et/ou du deuxième capteur (320),
en particulier dans lequel au moins deux parmi le premier dispositif périphérique (300), le deuxième dispositif périphérique et le troisième dispositif périphérique sont le même dispositif périphérique.

5. La méthode (100, 100', 100") dans laquelle l'une quelconque des revendications précédentes, comprenant en outre:
recevoir (S130), par l'ordinateur (200), d'une troisième entrée provenant d'un utilisateur, dans lequel la troisième entrée comprend au moins un paramètre limite relatif au premier capteur (310) et/ou au deuxième capteur (320) ;
stocker (S140) le au moins un paramètre limite; et
limiter (S150) la au moins une valeur seuil (240) de telle sorte que ladite au moins une valeur seuil (240) ne puisse pas être comparée par l'ordinateur (200),
dans lequel le paramètre de limitation est lié à une variation d'un paramètre de détection du premier capteur (310) et/ou du deuxième capteur (320).

6. La méthode (100, 100', 100") dans laquelle la revendication 5, dans lequel le au moins un paramètre limitant se rapporte à une durée pendant laquelle la lumière (360) sur le premier dispositif périphérique (300) est allumée et/ou à l'intensité de la lumière (360) sur le premier dispositif périphérique (300); et/ou
dans laquelle le au moins un paramètre limitant se rapporte à une sensibilité du premier capteur (310) et/ou du deuxième capteur (320); et/ou
dans laquelle le au moins un paramètre limitant peut remplacer la commande relative à la modification de l'état de la lumière (360) sur le premier dispositif périphérique (300) si l'ordinateur (200) reçoit l'indication que la au moins une valeur seuil (240) a été dépassée; et/ou
dans laquelle la sortie du premier capteur (310) et/ou la sortie du deuxième capteur (320) ne sont pas comparées à la au moins une valeur seuil (240) en raison du au moins un paramètre limitant ; et/ou
dans laquelle l'ordinateur est en outre configuré pour recevoir une valeur relative à un état de charge de la batterie du premier dispositif périphérique (300), et dans lequel la au moins une valeur seuil (240) comprend en outre au moins une valeur relative à l'état de charge de la batterie du premier dispositif périphérique (300), en particulier dans lequel le au moins un paramètre de limitation est lié à l'état de charge de la batterie du premier dispositif périphérique (300).

7. La méthode (100, 100', 100") dans laquelle la revendication 5, dans lequel l'ordinateur (200) est en outre configuré pour recevoir une heure locale de l'ordinateur (200) à partir du processeur (210), et dans lequel la au moins une valeur seuil (240) comprend en outre au moins une valeur relative à l'heure locale, et/ou l'ordinateur (200) est en outre configuré pour récupérer une heure de lever et/ou de coucher du soleil à partir d'un site web externe, et dans lequel la au moins une valeur seuil (240) comprend en outre au moins une valeur relative à l'heure de lever et/ou de coucher du soleil, en particulier dans lequel le au moins un paramètre de limitation est lié à l'heure locale de l'ordinateur (200) et/ou à l'heure du lever et/ou du coucher du soleil, et dans lequel le au moins un paramètre de limitation se rapporte à une modification de l'intensité de la lumière (360).

8. La méthode (100, 100', 100") dans laquelle l'une quelconque des revendications précédentes, dans lequel l'ordinateur (200) comprend en outre un émetteur (250) et le procédé comprend en outre :
la transmission (S180), par l'ordinateur (200), au premier dispositif périphérique (300), de la commande relative à la modification de l'état de la lumière (360) sur le premier dispositif périphérique (300) si l'ordinateur (200) reçoit l'indication que la au moins une valeur seuil (240) a été dépassée.

9. La méthode (100, 100', 100") dans laquelle l'une quelconque des revendications précédentes, dans lequel la lumière (360) est configurée pour rétroéclairer un actionneur (370) sur le premier dispositif périphérique (300), et/ou dans lequel la lumière (360) est une lumière blanche ou une lumière RVB, et/ou dans lequel l'ordinateur (200) supprime ou réduit la lumière bleue de la lumière RVB pendant les heures nocturnes afin de réduire la fatigue oculaire, en particulier dans lequel l'intensité de la lumière (360) est configurée pour passer de la première valeur à une troisième valeur ou de la deuxième valeur à la troisième valeur lorsque l'actionneur (370) est actionné, la troisième valeur étant déterminée par l'ordinateur (200) ou par l'utilisateur.

10. La méthode (100, 100', 100") dans laquelle l'une quelconque des revendications précédentes, dans lequel le deuxième capteur (320) est configuré pour supprimer au moins un composant lié à la sortie lumineuse d'un moniteur couplé à l'ordinateur (200) et déterminer le niveau de lumière ambiante de la zone entourant le premier dispositif périphérique (300) sans le au moins un composant lié à la sortie lumineuse du moniteur.

11. Un système informatique destiné à modifier l'état d'une lumière (360) sur un premier périphérique (300) d'un ordinateur, comprenant des moyens pour mettre en œuvre le procédé (100, 100', 100") de l'une quelconque des revendications 1 à 10.

12. Le système informatique selon la revendication 11, comprenant :
un pilote informatique (230) configuré pour exécuter le procédé (100, 100', 100") selon l'une quelconque des revendications 1 à 10; et
le premier dispositif périphérique (300), dans lequel le premier dispositif périphérique (300) comprend en outre un processeur (210, 350), dans lequel une mémoire (220) est configurée pour stocker le pilote informatique (230), et dans lequel le processeur (210, 350) est configuré pour exécuter une instruction de pilote informatique à partir de la mémoire (220).

13. Une programme informatique comprenant un pilote informatique (230) pour modifier l'état d'un voyant (360) sur un premier dispositif périphérique (300) d'un ordinateur (200), l'ordinateur (200) comprenant un processeur (210), une mémoire (220) accessible par le processeur (210) et le premier périphérique (300), dans lequel le programme informatique comprend des instructions qui, lorsque le programme informatique est exécuté par l'ordinateur, amènent l'ordinateur (200) à exécuter:
détecter le premier dispositif périphérique (300) comprenant un premier capteur (310) configuré pour détecter la proximité d'un utilisateur par rapport au premier dispositif périphérique et un deuxième capteur (320) configuré pour déterminer un niveau de lumière ambiante dans une zone entourant le premier dispositif périphérique (300);
recevoir (S110) une sortie provenant du premier capteur (310) relative à la proximité de l'utilisateur par rapport au premier dispositif périphérique et/ou une sortie provenant du deuxième capteur (320) relative au niveau de lumière ambiante dans la zone entourant le premier dispositif périphérique (300);
comparer (S120) la sortie du premier capteur (310) et/ou du deuxième capteur (320) avec au moins une valeur seuil (240), dans lequel la au moins une valeur seuil comprend au moins une valeur prédéterminée relative à la sortie du premier capteur (310) et au moins une valeur prédéterminée relative à la sortie du deuxième capteur (320);
recevoir (S160) une indication si la au moins une valeur seuil a été dépassée; et
si la au moins une valeur seuil a été dépassée, exécuter (S170) une commande relative à la modification de l'état de la lumière (360) sur le premier dispositif périphérique (300) en fonction de la au moins une valeur seuil dépassée, dans lequel l'état de la lumière (360) se rapporte à un état allumé ou éteint de la lumière (360) et/ou à une intensité de la lumière (360),
dans lequel l'ordinateur (200) est en outre configuré pour modifier la au moins une valeur seuil (240) sur la base d'un premier programme informatique ou d'un deuxième programme informatique détecté par l'ordinateur (200), en particulier dans lequel l'ordinateur (200) est configuré de manière à augmenter la sensibilité du premier capteur (310) et/ou du deuxième capteur (320) lorsque le premier programme informatique est détecté, et/ou de diminuer la sensibilité du premier capteur (310) et/ou du deuxième capteur (320) lorsque le deuxième programme informatique est détecté, et en particulier dans lequel le premier programme informatique est un programme de conception assistée par ordinateur, CAO, et le deuxième programme informatique est un programme de jeu vidéo et/ou un programme de jeu vidéo en réalité virtuelle, RV.

14. Un support de stockage lisible par ordinateur comprenant des instructions qui, lorsqu'elles sont exécutées par un ordinateur (200), amènent l'ordinateur (200) à mettre en œuvre le procédé (100, 100', 100") de l'une quelconque des revendications 1 à 10.
